# EUROPEAN PATENT APPLICATION

(11) **EP 1 220 507 A1**
(43) Date of publication of application: **03.07.2002**
(21) Application number: 00128215.1
(22) Date of filing: 22.12.2000
(51) Int. Cl.: H04L 29/06, G06F 17/30

(54) **Creating web content in a client and server system**

(71) Applicant: SUN MICROSYSTEMS, INC., Palo Alto, California 94303 (US)
(72) Inventor: Eilers, Bernd, 21107 Hamburg (DE); Laux, Thorsten O., 20099 Hamburg (DE)
(74) Representative: HOFFMANN - EITLE

(57) **Abstract**

In a data communication system (SYS), a client unit (CU) and a server (SERV) perform a data communication, in particular to provide the client unit (CU) with a instruction data set (IDS) in response to a content data request message (CDRQ) made by client unit (CU). An instruction format configuration file (IFCFG) contains a tree data structure (TRE) consisting of a plurality of instruction format nodes (N0; N1, N2; H1, H1.1, H1.2, H1.3), each instruction format node (NO) indicating a particular combination of instruction elements (IE) constituting a particular instruction format (IF) and having associated with it a node selection criterion (N1SEL). A content data request property provider unit (CDPP) extracts and determines properties from the content data request (CDPP) issued by the client unit (CU). An instruction format selection unit (IFSEL) searches the tree data structure (TRE) with the determined properties in order to find an instruction format node, whose associated node selection condition matches the properties. In particular, each node (NO) can comprise a screen template (ITEPMP) defining a particular screen layout including placeholders as well as an indication of some instruction element generation unit (OP), which will fill the placeholders with respective content data retrieved from a data base (DB). By unit of the selection procedure the instruction data set returned to the client unit (CU) can be provided in a flexible manner.

## Description

### FIELD OF THE INVENTION

The invention relates to a server unit of a data communication system in which one or more client units are provided by the server unit with an instruction data set in a particular instruction format in response to a content data request issued by the client unit. In particular, the invention desires to provide a mechanism by which the instruction format of the instruction data set (for example an HTML page) can be adapted, modified or varied depending on properties of the client unit as determined from the content data request message.

### BACKGROUND OF THE INVENTION

Computers have been conveniently used for a wide range of applications, e.g. ranging from simple editing of text documents to complex distributed processing applications involving a large number of possibly distributed data processing units and involving the transfer of data between the data processing units.

With the growing number of data processing units having access to computer networks such as to local area networks or world-wide networks, e.g. company-wide intranets or the Internet, a growing number of applications is offered which involve a plurality of data processing units. Such applications may be, for example, found in the field of home banking, office applications, remote e-mail applications, supercomputing applications or similar. In such data communication systems, high speed links, via permanent connections, circuit-switched connections or packet-switched connections, are used as a communication link to exchange digital data at high speed (high-bit rates) such that even graphics data or data from moving images can be exchanged among the data processing units.

It is a typical feature in such data communications systems that it is not required that all participating data processing units have the same powerful processing capabilities. That is, a main computer having powerful computing facilities can serve a number of smaller sub-computers through one or more of the above described communication links. Since typically the smaller sub-computers are only assigned the task of making access to a main computer and to request the processing facilities or data from the main computer whilst the main computer serves the data on the small sub-computers, the main computer is often referred to as a server (or server unit) and the small sub-computers are referred to as clients (client units). In such a scenario a client may typically request the execution of an application program at the server and may receive a data processing result or content data from the server via the network or the communication link connecting the client unit and the server unit.

Furthermore, systems are known where a plurality of clients can connect to a portal for the execution of an application. A portal may be a large site in a network including a plurality of servers which provide a variety of services including, for example, office applications, searching functions, news functions, e-mail applications, discussion groups, on-line shopping and links to other sites on the network. A portal may thus be a general purpose site offering the capability to perform applications on behalf of a client or assisting a client in executing the application.

Generally, in a client and server or portal scenario the server may be a large computing device which has also the resources to store and execute application programs which are used in providing services to a client. Since the applications and sufficient computing power are generally available at the server side, the client may be a data processing unit with less powerful computing resources, functioning as an interface to receive user commands required for execution of a desired application program when providing the request, i.e. to transmit commands from the client to the server, and further to receive and, for example, to display computation results from the server.

### CONVENTIONAL SERVER AND CLIENT CONFIGURATION

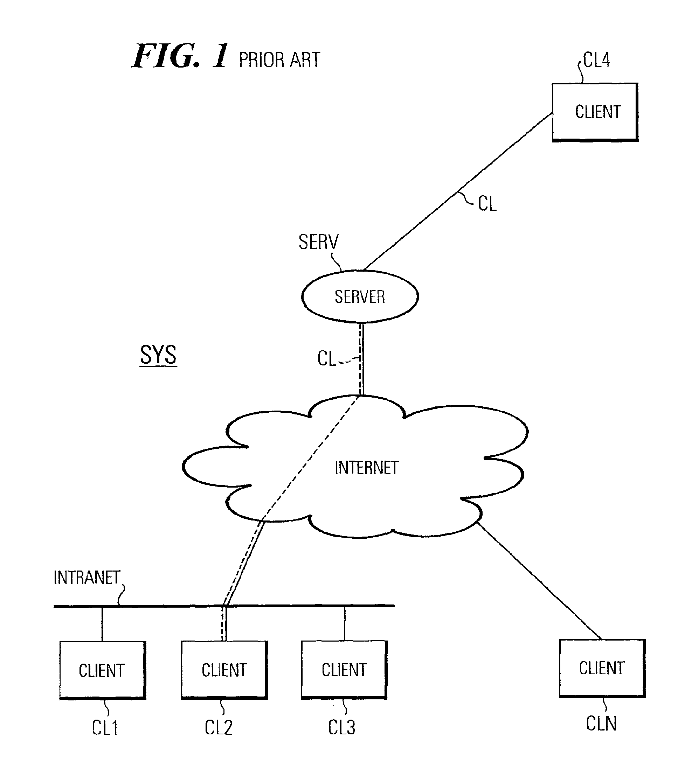

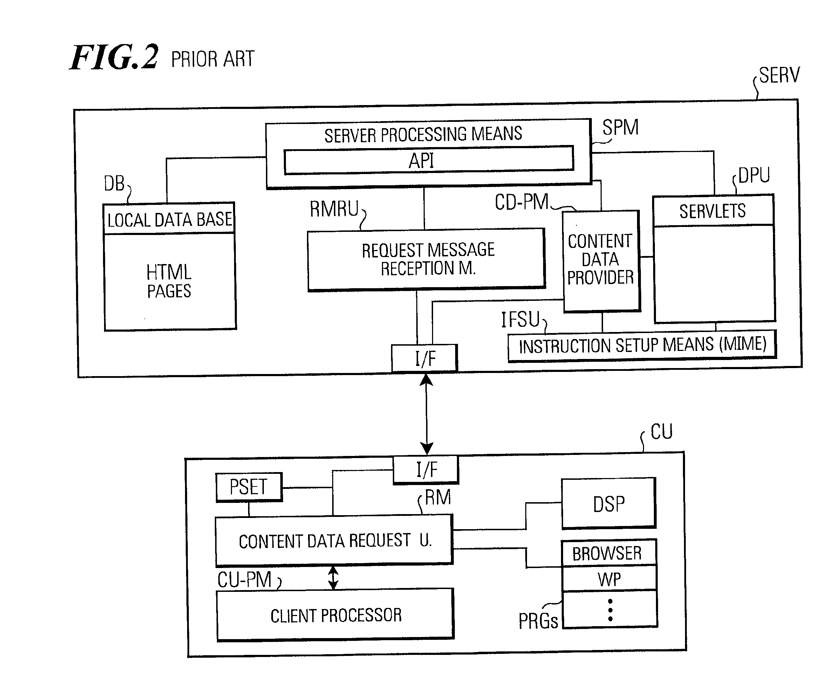

A typical data communication system SYS of the prior art is shown in Fig. 1. Here, a server unit SERV and client units CL1, CL2, CL3, CL4, ..., CLN communicate through communication links CL, possibly through an intranet and/or the Internet. Fig. 2 shows a typical block diagram of a server unit SERV and a client CU in accordance with the prior art. The server unit SERV and the client CU communicate through a communication link CL connected to a respective interface I/F.

Typically, the server unit SERV comprises a request message receiving unit RMRO, a server processing unit SPM including an Application Programming Interface API, some data processing units DPU (if the server is a JAVA® based server (JAVA® is a registered trademark of Sun Microsystems) these data processing units DPU are for example servlets or JAVAserver pages), a content data provision unit CD-PM, a local data base DB, where the content data, e.g. HTML pages, are stored, and an instruction format set-up unit IFSU which essentially sets the MIME-type indicating a particular instruction format for the pages to be returned to the client unit.

Typically, the client unit CU comprises a content data request unit RM, a client processor CU-PM and a number of programs PRGs, for example, a content data requesting unit in the form of a browser. Furthermore, the client unit CU can comprise a display DSP and a page setting unit PSET.

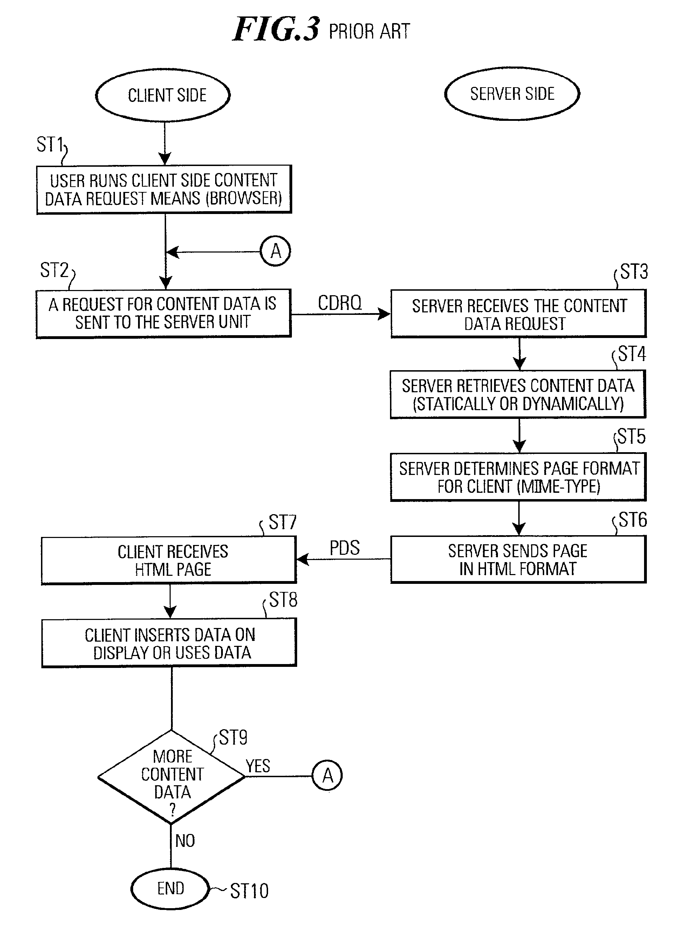

Fig. 3 shows an example of operations typically carried out by the client side and the server side for the typical scenario in Fig. 1.

### CONVENTIONAL TRANSFER OF CONTENT DATA TO THE CLIENT

For example, in case a user at a client side wishes to access a document from the server SERV, e.g. a web-page available at the server or another location, the user selects in operation ST1 one of the programs PGs, e.g. a particular browser, which is run on the client processor PU-PM. When the user clicks on a particular place on the screen, a content data request unit RM sends a content data request CDRQ to the server SERV in operation ST2. In the Internet protocol, such a request message CDRQ can typically be an HTPP message requesting the transfer of HTML-pages from a database DB located within the server SERV (or located elsewhere outside the server). The HTTP-request message includes the URL from which the HTML-pages should be retrieved and some additional header information.

After setting up the communication link CL between the client unit CU and the server unit SERV, the request message reception unit RMRU on the server side receives the content data request message CDRQ in the operation ST3. Alternatively, the client unit CU can also request the execution of some processing programs DPU, so-called servlets, by the server unit SERV.

In the operation ST4 the server processing unit SPM together with the content data provision unit CD-PM statically or dynamically retrieves the requested content data, e.g. the HTML-pages. In a static retrieval, the server processing unit SPM merely accesses a local database DB and retrieves the HTML-pages. In a dynamic retrieval the server processing unit SPM can run additional programs, for example, the servlets, in order to retrieve data also from a remote site in a dynamic manner. In this connection, the Application Programming Interface API is used for coordinating which of the servlets are used. After the operation ST4 an operation ST5 follows in which the page format for the client is determined. This will be explained below.

In the operation ST6 the content data providing unit CD-PM of the server unit SERV provides through the communication link CL the retrieved content data, i.e. an instruction data set to the client side. In the operation ST7, the content data or the instruction data set is received on the client side and in the operation ST8 the user at the client side has the option to display or print out the transferred content data on a display DSP, on a disc or a printer. If the requested content data are web-pages (HTML-pages), typically complete data sets relating to one page are requested and retransferred to the client side. Therefore, if in the operation ST9 the user requires further pages, i.e. data sets, from the server, the process continues with the operation ST2. If no further pages are required, the link is closed after some time, for example, by stopping the browser in the operation ST10.

### STRUCTURE OF THE INSTRUCTION DATA SET

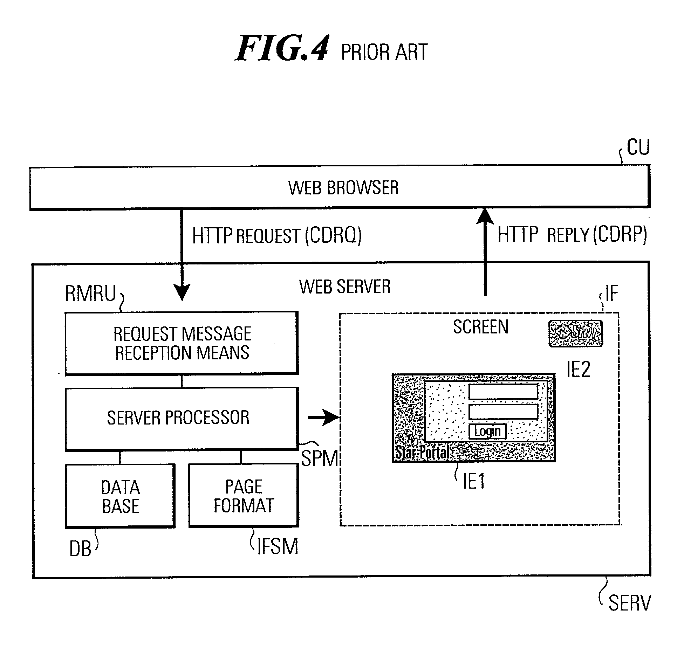

Fig. 4 shows an example of the HTTP request and HTTP reply scenario between the client unit CU and the server unit SERV for the case where the data set to be transferred back to the client unit CU contains content data which on the client side CU is to be used for a screen display. As shown in Fig. 4, the HTML-page comprises a screen layout format IF including a plurality of screen elements IE1, IE2. Here, the screen element IE1 is a log-in element and the screen element IE2 is a company logo. Furthermore, the screen layout IF can, for example, comprise a particular background colour. That is, in the case of Fig. 4 the screen format IF is constituted by a data set which comprises graphics data. In order for the client unit CU to recognize that the transferred data set comprises graphic element data sets, an instruction format setup unit IFSM shown in Fig. 4 and in Fig. 2 on the server side determines a so-called MIME-type which indicates the type of data contained in the HTML-page to be transferred to the client CU. Therefore, the operation ST5 in Fig. 3 determines the MIME-type and transfers an indication of the MIME-type to the client unit CU together with the data set in step ST6. On the basis of the MIME-type, the client unit CU can recognize that the transferred data set comprises graphics element data sets which can be displayed on the display DSP. Thus, in this case the transferred HTML-page is intended merely for being displayed on the display screen DSP.

However, the transferred data sets from the server unit SERV may not only constitute a graphics data set to be displayed on a display screen DSP but can also be a general instruction data set which the user can use for other purposes in the operation ST8. For example, the user at the client unit CU may request a transfer of a command data set for controlling a device on a client side CU, for example, a robot. That is, the client unit CU may not necessarily use the transferred data set for a display but for a control of a device.

Whilst in this case there is no necessity to display the commands on the display screen DSP, the HTML-page transferred from the server unit SERV will nonetheless have a particular instruction format IF similarly as the one shown for the screen layout in Fig. 4. That is, when the command data set is requested, it will also contain specific instruction elements corresponding to instruction element data sets in the instruction data set to be transferred to the client unit CU.

Hence, independently of what use is made at the client unit CU, every transferred instruction data set will have a particular instruction format IF consisting of a plurality of instruction elements and the MIME-type will indicate to the client unit CU the type of data which is transferred. Thus, generally an instruction data set is transferred back to the client unit CU and this instruction data set will comprise a plurality of instruction element data sets corresponding to the particular instruction elements forming the data set. Therefore, display frames for local visualization at the client side or command frames for other use at the client side can be transmitted from the server to the client unit as HTML-pages.

### STRUCTURE OF DATA REQUESTS

Furthermore, while in the above description it has been assumed that the request unit RM merely sends a content data request CDRQ to the server unit SERV, of course, more complex operation commands can be transmitted to the server side in a similar manner. For example, in case the client wishes to scroll through a document, a corresponding input command is given via the browser and is transmitted via the communication link to the server. In turn, the server prepares a corresponding display content for transfer to the client in order to enable the client to locally visualize changed display content. Similarly, in case the user wishes to edit the document, respective commands could be transmitted from the client to the server and accordingly be processed at the server. Changed display contents (content data) can then again be transmitted to the client for the local visualization on the display unit.

However, it is also possible, that not only the server has the necessary resources to provide a desired service, but a client may already have the required resources for providing the service such as rendering operations or editing a data file. Corresponding application programs may thus be available at both the client side, e.g. an applet, and the server side, e.g. a servlet, for performing a desired operation, i.e. providing a desired service. Such programs are also available as one of the programs PRGs shown on the client side in Fig. 2.

Since on the client side CU different browsers or different processing programs PRGs can be executed or different devices can be used on the client side CU, the server side SERV must also have knowledge about what type of program is run in order to determine in which manner the retrieved HTML-pages should be provided back to the client unit CU.

Typically, a content data request CDRQ issued by the request unit RM also contains request parameters, request header parameters, device properties and resource properties.

Device properties are used in conjunction with the client device. These properties refer to such things as the different display sizes of the client devices.

Resource properties cover all the properties that are assigned to a requested document or more generally to a resource. This, for example, includes the various document types (Star Office documents, Star Office write, Star Office calculator or other document formats such as PDF as well as customized content types used for folders, for example).

Since the server unit SERV can be accessed by different browsers, for example, Netscape browser 4.X and the Internet Explorer, special add-ins are required in each browser such that a document can be edited. To enable the dynamic download of the correct add-in, the browser type can be identified via request header parameters of the request message CDRQ.

Finally, for the above-described custom commands issued by the client unit, so-called request parameters are available in the request message CDRQ such that the commands can be recognized on the server side.

### DISADVANTAGES

Despite the fact that according to the prior art it is already possible to transfer in the content data request CDRQ (a HTTP-request) information of the request parameters, request header parameters, device properties and resource properties, the server unit SERV simply retrieves the HTML-page (the content data) and determines the MIME-type and then provides back to the client unit CU a corresponding data set including a fixed instruction format IF determined by the MIME-type. That is, despite the fact that some information about the client unit properties and/or resource properties are transferred to the server unit SERV in the request message CDRQ, the format of the data set transferred back to the client unit CU is fixed, i.e. independent of the properties. Thus, independent of the capabilities of the client unit CU the same format will always be used (only the MIME-type is determined to tell the client unit what type of data is retransferred). Consequently, the page set up unit IFSET uses a rather fixed frame or instruction data set format when retransferring the requested data. Thus, the main disadvantage results that, independently of the capabilities of the client device, the executed browsing program, the set options on the browsing program and the type and size of the requested content data, the instruction format (screen format or command format) remains the same.

That is, it would generally be desirable to provide a flexible and extendable framework for creating content depending on the client unit or resource properties, i.e. the server unit SERV should be capable of changing the instruction format depending on the client capabilities and the type of requested content data.

### SUMMARY OF THE INVENTION

It is therefore desirable to provide an improved server unit and a method for exchanging data between the server unit and the client unit in a data communication system which allow the server unit to make the instruction format of the instruction data set flexibly dependent on the capabilities of the client unit and the properties of the requested content data.

The invention as recited in the independent claims allows the server unit to make the generation and retrieval of the content data and its format dependent on the properties of the client unit and the properties of the resources. For this purpose the server unit selects from a number of instruction format templates a particular instruction format template dependent on a client or resource properties.

The template describes at what positions in the data set particular instruction elements can be placed. The data which is inserted in the places indicated in the instruction format template will then be filled by a particular instruction element generating unit which yet again has been selected, in accordance with the client capabilities or resource capabilities, from several available instruction element generating units.

The special selection of the instruction format template and of the special instruction element generating units is made by searching a tree node structure with the client or resource properties wherein each node corresponds to a particular template or a particular combination of instruction element generating units. When the properties with which the search is done match a node selection criterion associated with each node the particular template or combination of instruction element generating units is executed.

Thus, a flexible and extendable framework for creating content is provided by providing a new way of registering new content creation servlets and by changing how existing content is created. The tree structure for the search thus makes it easy to select and execute the appropriate instruction element generating units for flexibly adapting the instruction format.

Thus, a server unit of a data processing system in which one or more client units are provided by the server unit with an instruction data set in a particular instruction format in response to a content data request comprises a content data request property provider unit for providing one or more content data request properties of the content data request made by a client unit; an instruction format set up unit for preparing an instruction data set having the instruction format and consisting of a plurality of instruction element data sets each representing a particular instruction element of the instruction format and generated by one or more instruction element generating units of said instruction format set up unit; an instruction format configuration file containing a tree data structure consisting of a plurality of instruction format nodes, each instruction format node indicating a particular combination of instruction elements constituting a particular instruction format and having associated with it a node selection criterion; an instruction format selection unit for searching said tree data structure with the determined content data request properties and for selecting an instruction format node whose associated node selection condition matches said determined content data request properties; and said instruction format set up unit preparing the instruction data set to be sent to the client unit by executing the instruction element generating units of the selected instruction format node.

The content data request property provider unit may advantageously analyse said content data request to provide one or more client unit related properties and content data related properties.

The content data request property provider unit can comprise a number of units for determining the properties in different categories. Thus, advantageously the content data request property provider unit includes a device property provider unit for providing for each client unit as said client unit related properties device properties about the client unit device; a resource property provider for providing as said content data related properties resource properties about data content resources providing the content data; a content data requesting unit property provider for providing as said client unit related properties about the content data requesting unit used at the client units; and a command property provider unit for providing as said client unit related properties, properties about commands issued at the client units (CU).

Furthermore, the content data request property provider unit can include a first property memory for client unit related properties and a second memory for content data related properties.

The content data request property provider unit can analyse a first content data request to obtain said client unit related properties and said content data related properties, wherein at the arrival of any subsequent content data request in the same session said content data request property provider only accesses said first memory or said second memory to provide said client unit related properties and/or said content data related properties. Since properties from previous content data requests are stored in the respective memories, it is not necessary to send all the parameters with subsequent content data requests and instead of this the details of previous requests can be accessed.

Furthermore, the node selection condition can comprise one or more node selection requirements including at least one property name parameter and an expected property; wherein said instruction format selection unit is adapted for starting the search at the root instruction format node; wherein said instruction format selection unit is adapted for requesting from the property provider unit for the current content data request a property relating to the property name parameter of a node selection condition of a next instruction format node; wherein said instruction format selection unit is adapted for branching to said next instruction format node, if the provided property matches with the expected property. When searching from the route node through the other nodes of the tree structure it is also possible that an instruction template "learned" further above in the search process can be "inherited" by a node further down which itself has no specification of such an instruction template. The search through the tree structure is terminated when a child node with no further depending nodes is found. The instruction format can include an instruction template and a plurality of instruction element positions into which the instruction element generating units insert instruction element data sets when they have been executed.

The instruction data set can be a set of instruction data for displaying a screen with a particular screen layout format on the client unit, wherein the instruction template is a screen layout template and said instruction element positions are placeholders into which the instruction element generating units insert screen element data sets when they have been executed. Thus, a screen is a template with a set of arguments and a template describes at what positions the arguments are inserted in the template in the process of creating the response.

The instruction data set can also be a set of instruction data for controlling a device with a particular control command layout format on the client unit, wherein the instruction template is a command layout template and said instruction element positions are command holders into which the instruction element generating units insert command data sets when they have been executed. Thus, a command instruction data set can be formed in a flexible manner, e.g. an instruction format with basic instructions and sub-instructions can be formed in a flexible manner.

Thus, a method in a data processing system for providing one or more client units by a server unit with an instruction data set in a particular instruction format in response to a content data request, comprises: providing one or more content data request properties of a content data request made by a client unit; preparing an instruction data set having the instruction format and consisting of a plurality of instruction element data sets each representing a particular instruction element of the instruction format; searching a tree data structure stored in an instruction format configuration file and consisting of a plurality of instruction format nodes, each instruction format node indicating a particular combination of instruction elements constituting a particular instruction format and having associated with it a node selection criterion, with the determined content data request properties and for selecting an instruction format node whose associated node selection condition matches said determined content data request properties; and preparing the instruction data set to be sent to the client unit by executing instruction element generating units of the selected instruction format node.

When the node selection condition comprises one or more node selection requirements including at least one property name parameter and an expected property, the method can comprise the steps of starting the search at a root instruction format node; requesting from a property provider unit for the current content data request a property relating to the property name parameter of a node selection condition of a next instruction format node; and branching to said next instruction format node if the provided property match with the expected property.

A computer program product stored on a computer-readable storage medium comprises code units adapted to carry out the aforementioned operation. Furthermore, a program has instruction adapted to carry out at the server side the aforementioned operations. Furthermore, a data carrier for a server side having computer-readable storage code embodied therein comprises units for providing one or more content data request properties of the content data request made by a client unit; units for preparing an instruction data set having the instruction format and consisting of a plurality of instruction element data sets each representing a particular instruction element of the instruction format and generated by one or more instruction element generating units of said unit; units containing a tree data structure consisting of a plurality of instruction format nodes each instruction format node indicating a particular combination of instruction elements constituting a particular instruction format and having associated with it a node selection criterion; units for searching said tree data structure with the determined content data request properties and for selecting an instruction format node whose associated node selection condition matches said determined content data request properties; and said units being adapted for preparing the instruction data set to be sent to the client unit executing the instruction element generating units of the selected instruction format node.

Furthermore, the client unit and the server unit are JAVA based units, wherein the instruction format configuration file containing the tree data structure is a JAVA XML file. In such a case, the node selection criterion can be formed by one or more of a requirement type, a requirement name, a requirement value and an operation type. Furthermore, the instruction element generating units can comprise a component name and an argument name through which execution programs of JAVA server pages or a servlet are executed. Furthermore, in the argument name substitution names can be formulated.

Further advantageous features and improvements of the invention can be taken from further dependent claims. Furthermore, the server unit and the data communication system and the method may comprise features, which have been separately described and claimed in the specification and the claims, respectively.

### BRIEF DESCRIPTION OF THE DRAWINGS

In the drawings, the same or similar reference numerals denote the same or similar steps or parts throughout.
- Fig. 1: shows a data communication system in which a server and a plurality of clients perform a data communication in accordance with the prior art;
- Fig. 2: shows a block diagram of a client unit and a server unit in accordance with the prior art;
- Fig. 3: shows a client/server communication when the client requests the transfer of content data from the server, in accordance with the prior art;
- Fig. 4: shows an example of transferring a HTML-page with a particular screen layout format to the client unit, in accordance with the prior art;
- Fig. 5a: shows a server unit and a client unit for explaining some basic aspects of a general embodiment;
- Fig. 5b: shows a flowchart of some basic procedures of the general embodiment;
- Fig. 5c: shows the setting of a template and places for the instruction format, in accordance with the general embodiment;
- Fig. 5d: shows a block diagram of a server unit and a client unit in accordance with a more detailed embodiment of the invention;
- Fig. 6: shows the content of the instruction format configuration file including a tree structure and the content of the instruction format set up unit;
- Fig. 7a: shows an part of the method in accordance with an embodiment of the invention, in particular the operations for providing the content data request properties on the server side;
- Fig. 7b: shows a part of the method in accordance with an embodiment of the invention, in particular showing the operations for searching and preparing the instruction format;
- Fig. 8a: shows a diagram similar to Fig. 4, when transferring to the client unit an instruction data set having an instruction format as formed by the present invention;
- Fig. 8b: shows an example of a template and a placeholder for a log-in page, when the screen template is first set up and subsequently filled with data;
- Fig. 8c: shows an example similar to Fig. 8b where a screen template comprises a plurality of placeholders which are filled with data by a plurality of selected instruction element generation units (components) ;
- Fig. 9: shows a flow chart of the operation S7 in Fig. 7b;
- Fig. 10a: shows a typical tree structure stored in an instruction format configuration file, in accordance with one embodiment of the invention;
- Fig. 10b: shows the content of the processing carried out in the instruction format selection unit, in particular an XML representation of main nodes in the tree structure of Fig. 10a;
- Fig. 10c: shows a tree structure for the sub-nodes of the tree shown in Fig. 10a;
- Figs. 10d-10e: show the content of the instruction format selection unit IFSEL as an XML file, in particular showing the definition of the sub-nodes of Fig. 10c; and
- Figs. 10f-10i: show the content of the instruction format selection unit IFSEL as an WML file, in particular showing the definition of the sub-nodes of Fig. 10f.

### DETAILED DESCRIPTION OF THE PREFERRED EMBODIMENTS

Hereinafter, embodiments of the invention will be described with reference to the drawings. Whilst hereinafter often reference is made to special message exchanges between a client unit and a server unit in an Internet application example where web-pages are retrieved from a server unit in a JAVA-environment, it should be understood that the invention is not limited to the special JAVA data communication implementation.

The invention can be applied to any client server scenario, independent of the type of client and server implementation used. Furthermore, hereinafter reference is often made to the case where a special screen layout is adaptively prepared as said instruction format. However, the invention is not restricted to setting up a screen layout and any other instruction format including command instructions or similar can be used.

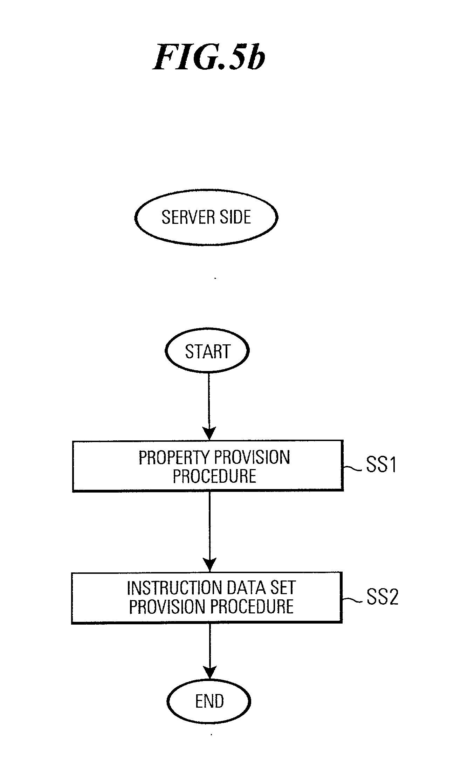

Before coming to a more detailed description of other embodiments, hereinafter we describe some aspects of a general embodiment with reference to Fig. 5a, 5b.

In Fig. 5a, a general server SERV has a content data provider unit CD-PM, which essentially retrieves content data from a data base DB, e.g. in the form of HTML pages. Furthermore, a unit is provided which is here called the screen registry IREG. It generally contains two memories MEM1, MEM2. The server SERV is to provide an instruction data set IDS in a particular instruction format IF to the client unit CU. This is generally done by means of a HTTP response message, as was explained above. The screen registry IREG provides some information P on the capabilities of the client unit CU and/or the properties of content data, e.g. from the content data requested by the client unit CU, at least to the content data provider CD-PM.

Thus, the server unit SERV is adapted to make the instruction format IF of the instruction data set IDS flexibly dependent on the capabilities of the client unit CU and/or the properties P of the content data CD. That is, as shown in the general method of Fig. 5b, first there is a property provision procedure SS1 in which the screen registry IREG provides the capabilities (properties) of the client unit CU and/or information on properties of some content data CD. Then, there follows an instruction data set provision procedure SS2, in which the instruction data set IDS adapted for example in its format in accordance with the determined properties, is provided to the client unit CU. Thus, the data set IDS is flexibly dependent on the properties.

According to another embodiment, as shown also in Fig. 5a, the screen registry IREG can also provide the properties P to the data base DB, which stores the content data CD, which is possibly requested by the client unit CU. Then, the server unit SERV, more precisely the content data provider unit CD-PM, can also make the generation and retrieval of content data CD and its format flexibly dependent on the properties of the client unit CU and/or the properties of resource units, which provide said content data CD. Therefore, according to this embodiment, already the retrieval of the data and not only the adaptation of its format can be made flexibly dependent on the relevant properties.

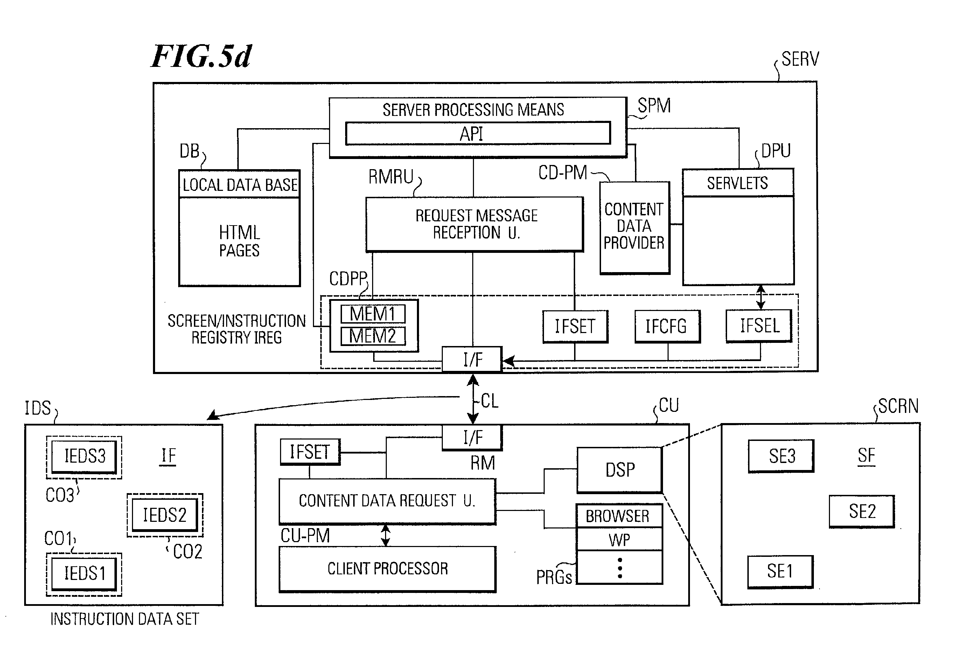

Whilst in accordance with one embodiment the screen registry IREG has already stored the client unit or content data related properties in the screen registry IREG, for example the client unit-related properties in a first memory MEM1 and the content data related properties in a second memory MEM2, in accordance with another embodiment, the screen registry, more precisely a content data request property provider unit CDPM (see the more detailed block diagram in Fig. 5d to be described below) is adapted to analyse a content data request (i.e. the HTTP request) in order to find out the one or more client unit related properties and content data related properties.

The properties detected from the content data request can be used for many other purposes in addition to the purpose of flexibly retrieving and/or adapting of the format of the instruction data set IDS. However, advantageously, the flexible retrieval of a content data and/or the changing of the format of the instruction data set IDS can be varied in accordance with the properties which have been determined by analysing the content data request. Thus, the content of the first memory and the second memory, i.e. the relevant properties stored therein, can determine the formatting and/or retrieving and processing of the content data.

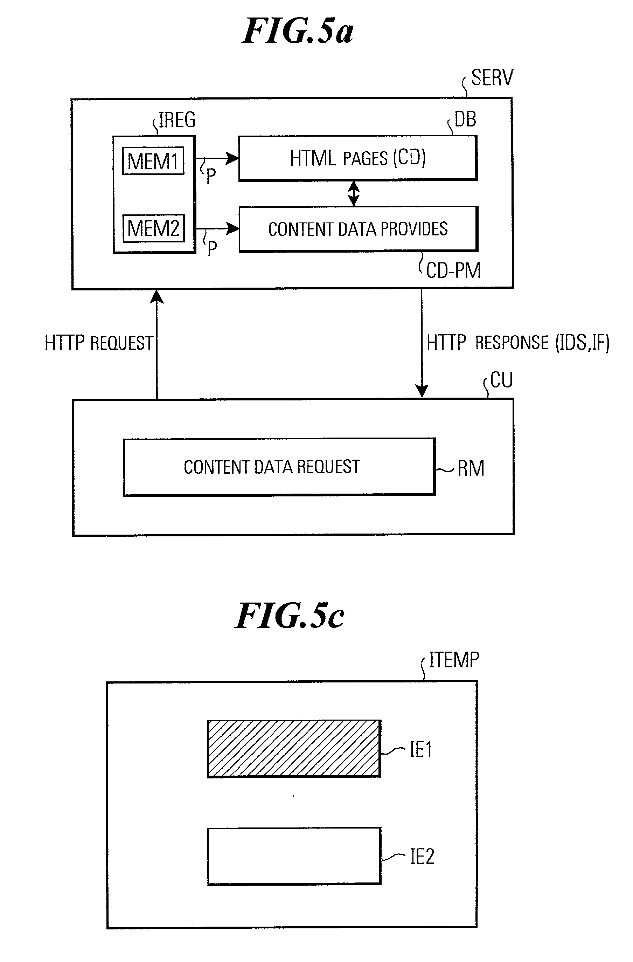

According to another embodiment, it is very advantageous, if the generation of the instruction data set IDS is separated in two parts, namely in a first part, in which a selection unit IFSEL (see the more general block diagram in Fig. 5d) selects from a number of instruction format templates ITEMP a particular instruction format template ITEMP as shown in Fig. 5c. This template describes at what places in the instruction data set IDS particular instruction elements IE can be placed. As will be understood from Fig. 5a, such a selection of an instruction format template ITEMP can be made dependent on the client properties P. Thus, in accordance with different properties, different templates can be selected.

Furthermore, the template ITEMP selected by the selection means in accordance with the properties can comprise places into which respective instruction element generating units will insert data, as already indicated with the hatched portion in Fig. 5c. The selection unit IFSEL can also select for each of the pre-specified places IE1, IE2 in the selected template ITEMP, the respective instruction element generating units in accordance with the client capabilities or resource capabilities P. Therefore, the selection of the template and/or the selection of the generation unit responsible for inserting data into the places can be made dependent on the properties P provided by the screen registry IREG.

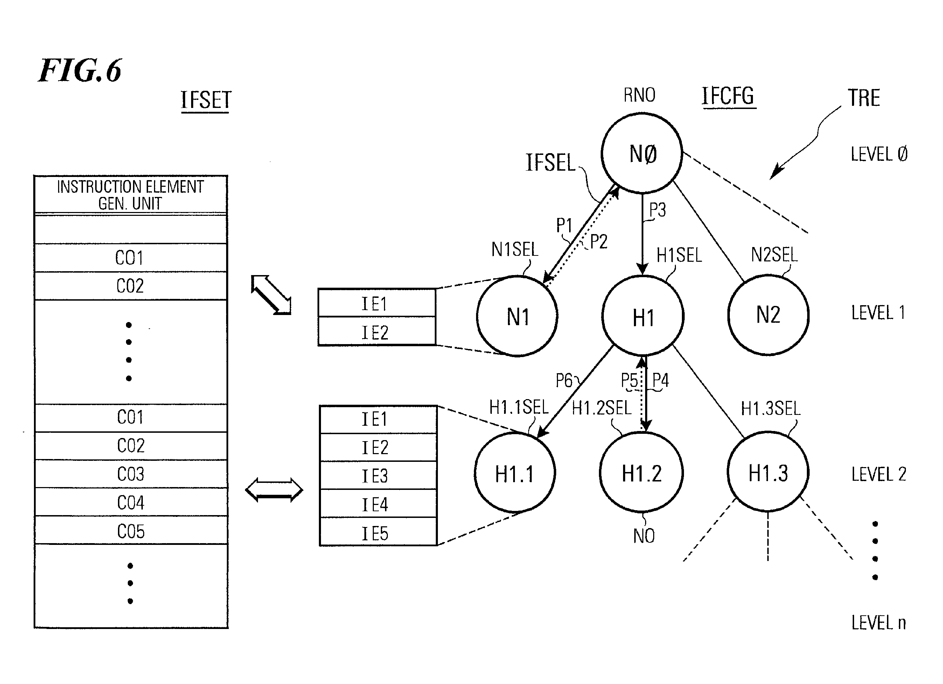

In accordance with another embodiment, the aforementioned selection procedures, which are dependent on the client properties and resource properties can be made by searching a tree structure in a configuration file IFCFG with the client unit related and/or content data related properties. In a tree structure, each node generates the instruction data set with a different instruction format IF. Thus, a tree structure (see for example Fig. 6) is used for flexibly generating the instruction data set, for example for flexibly selecting the template and the respective instruction elements generation units, for example also dependent on the client properties and/or the content data properties.

As will also be described below with more details, in accordance with one embodiment, the tree structure can be in an XML configuration file, wherein each node in the tree structure generates the instruction data set IDS in a different instruction format IF with a screen template ITEMP generated by a template jsp (JAVA Server Pages) or a servlet with a set of argument servlets and describing at what positions the arguments are to be inserted in the template.

Above, it was already explained that the screen registry IREG provides the properties relating to the client unit and/or the resources providing the content data. However, the properties may also relate to other factors of external influences and the provided properties used for the selection are not restricted to the client unit properties and the resource properties detected from the content data request message. Any other type of property can therefore be used for the selection procedure.

Furthermore, in accordance with one embodiment, the tree structure is fixed and is independent from the individual sessions built up between the server SERV and the client unit CU. In accordance with another embodiment, the tree structure in the configuration file can, however, be set new during each session. Furthermore, in accordance with yet another embodiment, it is also possible that the tree structure itself is made dependent on the properties, i.e. the client unit related properties and/or the content data or resource properties.

Therefore, in the description of the other embodiments below, it should be noted that many operations and units can operate dependent on properties, even if it is not explicitly described. Thus, a full flexibility is obtained in providing the instruction data set to the client unit in an as flexible as possible manner. This flexible adaptation procedure is hereinafter described with further embodiments, wherein further details of the above described general embodiments will become apparent.

### DETAILED CONFIGURATION OF THE SERVER AND THE CLIENT

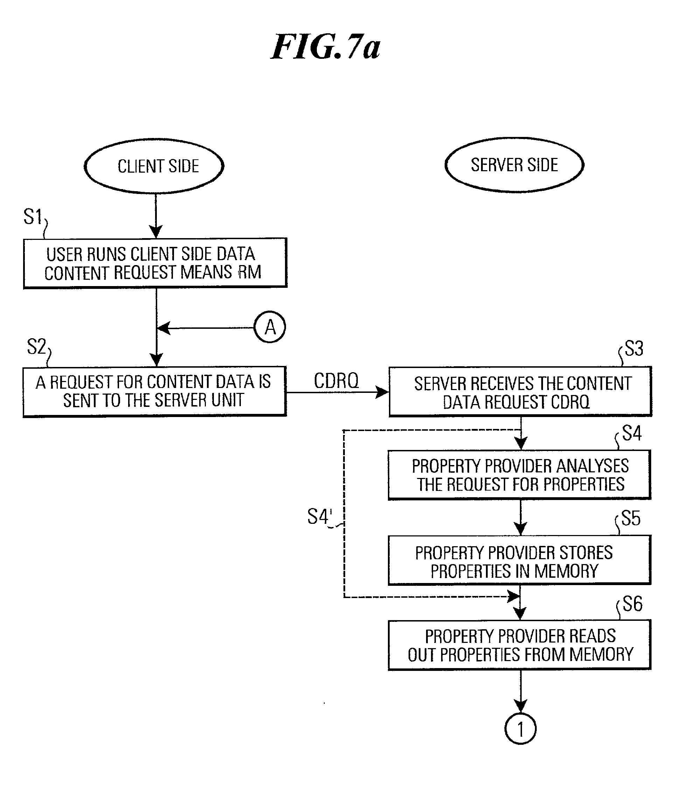

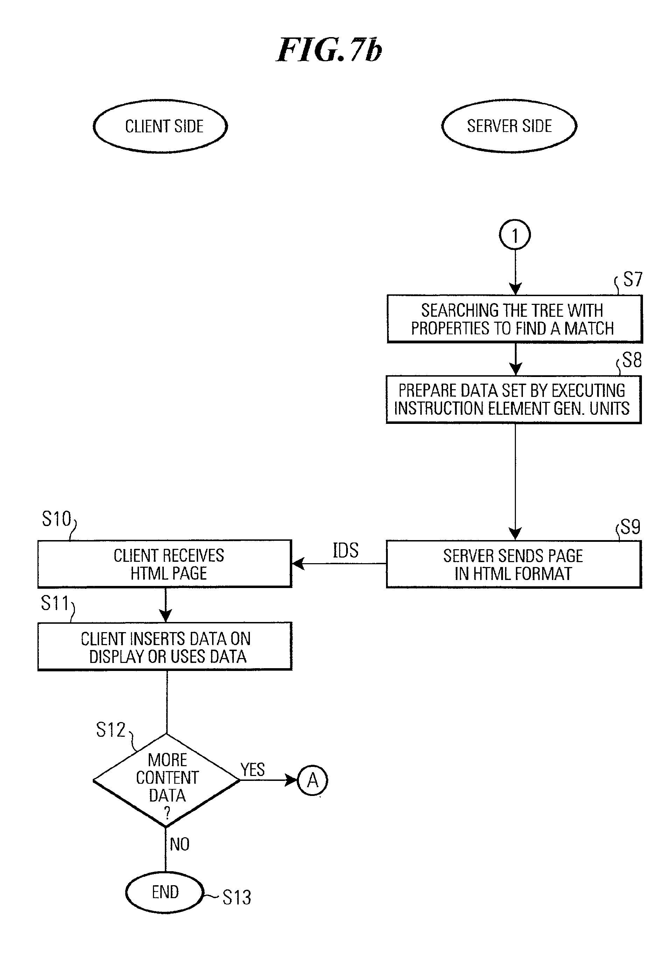

A first embodiment of the invention will be described with reference to Fig. 5d showing a server unit SERV and a client unit CU and Fig. 7a, 7b showing operations when communicating messages between the server unit SERV and the client unit CU.

The server unit SERV shown in Fig. 5d includes, as the server unit SERV the prior art in Fig. 2, a server processing unit SPM including an Application Programming Interface API, a content data provision unit CD-PM, a request message reception unit RMRU, a database DB including content data, for example, in the form of HTML-pages, and an interface I/F for communicating with the client unit CU. Furthermore, the Application Processing Interface API handles one or more data processing units DPU, e.g. servlets. That is, as the prior art server unit SERV in Fig. 2, also the server unit SERV in Fig. 5d can receive a content data request CDRQ from the client unit CU, can retrieve content data, for example directly in a static way from the local database DB, or in a dynamic manner by executing a servlet to acquire the content data from a remote location. The content data providing unit CD-PM carries out this collection of content data and can transfer back to the client unit CU a response message including the content data as a data set, for example, as an instruction data set in a particular instruction format IF.

In addition, the server unit SERV in Fig. 5d comprises a content data request property provider unit CDPP, an instruction format set up unit IFSET, an instruction format configuration file IFCFG and an instruction format selection unit IFSEL. The provider unit CDPP, the unit IFSET, IFSEL and the configuration file IDCFG are part of a general unit which is here called the screen/instruction registry IREG. As will be explained below with specific reference to the individual functions carried out by these units, the overall purpose of the screen/instruction registry IREG is to obtain from a received content data request CDRQ certain properties about the client unit CU and the required resources and to perform a flexible adaptation of the instruction format IF of the content data to be sent back to the client unit CU. Thus, the instruction data set will be formed by different instruction elements generated by one or more instruction element generating units specially selected in accordance with the detected properties.

The client unit CU shown in Fig. 5d includes, as the prior client unit CU in Fig. 2, a content data request unit RM, a client processor CU-PM, a display DSP and a number of content data requesting units PRGs, such as different browser programs which are run on the client processor CU-PM. Each of these programs is adapted to output content data requests to the server unit SERV. Furthermore, of course, the client unit CU can also issue commands, either as part of the content data request or as a separate message.

The instruction format set up unit IFSET of the client unit CU has a similar function as the page set up unit PSET in Fig. 2, namely to set up a special screen format when displaying the content data transferred back from the server unit SERV on the display unit DSP.

Thus, Fig. 5d shows a server unit SERV of a data communication system SYS in which one or more client units CU are provided by the server unit SERV with an instruction data set in a particular instruction format in response to a content data request CDRQ issued by the client unit CU. Since the instruction data set and in particular its instruction format is an advantageous aspect of embodiments described herein, hereinafter the general structure of the instruction data set is explained.

### CONFIGURATION OF THE INSTRUCTION DATA SET

Although the client unit CU may desire via the content data request CDRQ that some graphics display data, for example, in the form of HTML-pages, is transferred back as content data, of course, the communication link CL and in fact also the server SERV do not distinguish between graphics data or other type of data, for example, command data, in as far the transfer over the communication link CL is concerned. Since the content data request and response procedure is carried out in a one-to-one relationship, i.e. for each content data request one instruction data set IDS is transferred back, it is useful to regard the content data transferred back from the server unit SERV as one complete data set (instruction data set) which is self-contained and contains certain types of sub-data sets.

That is, the instruction data set IDS is composed by a plurality of instruction element data sets IEDS each representing a particular instruction element IE of the complete instruction format IF. The instruction element data sets IEDS can be distributed over the complete instruction data set IDS as shown schematically on the left-hand side of the client unit CU in Fig. 5d. If the instruction data set relates to a graphics data set, the graphics screen display obtained with such an instruction data set IDS is as an example shown on the right-hand side of the client unit CU. Thus, each particular instruction element data set IEDS1, IEDS2, IEDS3 would correspond to a specific screen element SE1, SE2, SE3 displayed at specific positions on the screen SCRN. Thus, a specific screen format SF would be built up.

Of course, it should be understood that there need not necessarily be a one-to-one positional relationship between the instruction element data sets IEDS and the positions of the screen elements SE. The illustration in Fig. 5d should only make clear that each individual instruction element data set IEDS will form a particular screen element SE. However, of course, the instruction data set IDS will also comprise an instruction format IF, that is the instruction format IF indicates via the instruction element data sets IEDS the format of the screen SCRN which will eventually be displayed on the display unit DSP.

On the server side SERV, each of the instruction element data sets IEDS will have been generated by a specially selected instruction element generating unit CO1, CO2, CO3 of the instruction format set up unit IFSET, as indicated with dashed lines in the instruction data set IDS in Fig. 5d.

Having understood the relationship between the instruction format IF and the example of the screen format SF, a first advantage is that the instruction format IF and the screen format SF respectively, i.e. the positional placement of screen elements SE on the screen SCRN, can be selected in a flexible manner in accordance with the properties of a content data request. A second advantage of the invention is, once the instruction or screen format has been set, to allow a flexible filling of the instruction elements or screen elements with content data, also dependent on properties extracted from a content data request.

Incidentally, the above explanation equally well holds for the case where content data in the form of command data is transferred, instead of graphics screen data. As explained above, also in this case the data set transferred from the server unit SERV will have to have a certain "instruction format", e.g. how the individual command element data sets will be sequentially arranged into main commands and subcommands, for example, for controlling a device on the client unit CU, e.g. a robot.

Hereinafter, with reference to Fig. 5d, Fig. 6, Fig. 7 and Fig. 8, the procedure to adapt the instruction format or screen format (screen layout) dependent on properties of the content data request by using a tree structure (Fig. 6) in will be explained for several embodiments.

### PROVISION OF CONTENT DATA REQUEST PROPERTIES

Hereinafter, the procedure of providing a flexible instruction or screen format is also referred to as "screen registry operation" or "profiling service".

Since the screen registry operation is made dependent on properties of the client unit or properties of the resources providing the content data, the actual adaptation procedure is preceded by a property provision procedure as shown in Fig. 7a. In the operation S1, a client side content data request unit RM is run by the user, e.g. a browser program, a communication link CL to the server unit SERV is set up and the content data request CDRQ is sent from the client unit CU to the server unit SERV in the operation S2. In the operation S3 the request reception unit RMRU of the server unit SERV receives this content data request message CDRQ.

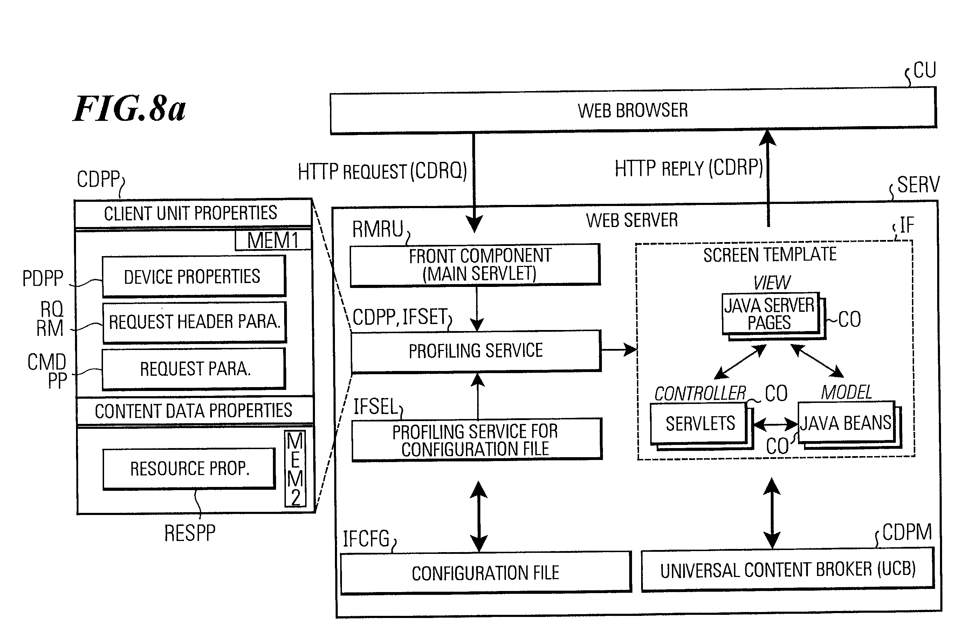

As shown in Fig. 8a, in accordance with one embodiment the content data request CDRQ is a HTTP-request issued by a web browser (content data request unit) and in accordance with one embodiment the request message reception unit RMRU is a front component or front end including a MainServlet. This MainServlet receives all requests made by the different clients.

In the operation S4 the content data request property provider unit CDPP (forming together with the instruction format set up unit IFSET the profiling service) analyses the content data request CDRQ with respect to its properties.

In the operation S5 the content data request property provider unit CDPP, in accordance with one embodiment, stores the extracted properties in one or more memories MEM1, MEM2 of the provider unit CDPP. When requested by the profiling service, for example, by the instruction format selection unit IFSEL, the property provider unit CDPP can read out the stored properties from the memory in the operation S6.

To obtain a minimum amount of property information, at least the first content data request message CDRQ must be analysed with respect to the properties by the provider unit CDPP in the operation S4. However, in the request-response scenario (one content data request will exactly be answered by one data set (HTML-page), of course, it is possible that the same client unit will issue further content data requests CDRQ. In this case, it is not necessary that the provider unit CDPP always extracts the same property information from all subsequent content data request messages CDRQ and it can be sufficient, in the same session, that the content data request property provider CDPP only accesses the memory in the operation S6 to provide for the client unit indicated in the content data request CDRQ the related properties. That is, with subsequent content data requests CDRQ, the operations S4, S5 may be skipped (see the bypass operation S4'). Furthermore, in accordance with another embodiment, it is also possible that the properties are kept or updated from session to session. That is, if in one session some properties have been determined (through one or more analyses of one or more content data requests in the same session), these properties can be "carried forward" to the next session, e.g. if there are permanently stored in the memories MEM1 and MEM2.

Furthermore, it should be noted that properties belonging to two or more different client units can be cross-coupled, from request to request in one session, or from session to session. That is, it is also possible that a first client unit carries some properties which are relevant also for other client units. For example, the content data request to be analysed on the server side may contain additional information about a backup client up to be used in case of failure of the first client unit. Furthermore, there may be clusters of linked client units such that some information may indeed be common to a sub-group of client units CU. This could for example be the case if all client units CU of a company have the same type of device, such that a device identification could be commonly assigned for all client units in the server on the basis of only a single content data request from a single client unit.

Furthermore, in accordance with yet another embodiment, it is also possible that the server evaluates or processes all properties of all client units together to obtain common information for all client units.

Furthermore, it is also possible that an instruction data set of a first client unit is not flexibly adapted or varied I accordance with the properties relating to such a first client unit but it is also possible that this first client unit instruction data set is varied in accordance with properties obtained for one or more other client units.

Therefore, in the analysing and storage operations S4, S5 the content data request property provider unit CDPP will analyse and store properties separately for different client units CU such that the property provider unit CDPP, when prompted to provide specific properties in the profiling procedure, will be capable of providing properties on a client unit specific basis.

A skilled person will understand that a content data request CDRQ, e.g. the HTTP-request shown in Fig. 8a, can comprise a large number of identifications and parameters from which the property provider unit CDPP can analyse and extract the desired properties. Such properties may be categorised as client unit related properties DPP, RQRM, CMDPP and content data related properties RESPP, as shown in Fig. 8a.

Therefore, in accordance with one embodiment of the content data request property provider unit CDPP shown in Fig. 8a can comprise a device property provider DPP for providing for each client unit CU as said client unit related properties device properties about the client unit device CU, a resource property provider RESPP for providing as said content data related properties resource properties about data content resources CDRES and about the content data, a content data requesting unit property provider RQRM for providing as said client unit related properties about the content data requesting unit RQRM used at the client units, and a command property provider CMDPP for providing as said client unit related properties also properties about command issued at the client units CU. The provider unit CDPP can comprise a first property memory MEM1 for client unit related properties and a second memory MEM2 for content related properties.

In accordance with one embodiment, the device properties are generally used in connection with the client device. Such properties refer to things as the different display sizes on the device. In accordance with one embodiment, the resource properties can cover properties, which are assigned to a requested document or more generally to a content data resource. Such properties, for example, include the various document types (Star Office documents, Star Office writer, Star Office calculator or other document formats such as PDF as well as customized content types used for folders, for example).

As explained above, since the content data request unit RM can use different browsers, e.g. Netscape Browser 4.X and the Internet Explorer, the type of content data requesting unit as one of said client unit related property can be identified by request header parameters in the content data request message CDRQ.

Finally, it is possible to supply additional information with each request in order to have custom commands run. These additional details are contained as request parameters in the request message. This is another example for the client unit related properties regarding issued commands.

As already briefly explained above, in order to avoid having to transfer a large number of additional parameters, in particular with respect to the request parameters, request header parameters, resource properties and device properties, the properties or property parameters can be collected and stored as attributes in one HTTP session, or can also be stored, updated and reused from session to session and the properties my also be cross-related between different client units. In this way, it is not necessary to send all the parameters with subsequent requests, and instead of this the details of previous requests can be accessed in memories MEM1, MEM2 separately for each client unit (That is the operations S4, S5 in Fig. 7a can be skipped with the operation S4').

A skilled person will realize that a great variety of properties depending on the type of request message and the type of processing in the provider unit CDPP can be stored in the memories and that the aforementioned examples are only examples for the device properties, resource properties, request header parameters and request parameters based on which such properties can be determined.

Finally, at the junction ① in Fig. 7a, the content data request property provider unit CDPP is in a position to provide one or more content data request properties CDPP determined on the basis of one or more content data requests made by separate client units CU. This can be done on the basis of a first or of several content data requests CDRQ.

Hereinafter, we explain how these properties, determined in Fig. 7a, are used by the profiling service in order to set up a flexible instruction or screen format.

### FORMAT ADAPTION PROCEDURE USING A TREE STRUCTURE

As described above, at the junction ① the content data request property provider unit CDPP is in a position to provide properties whenever it is requested to do so. Now, it will be explained how these properties are used to build up a flexible instruction or screen format.

As illustrated in Fig. 5d, the instruction format set up unit IFSET prepares an instruction data set IDS having a particular instruction format IF and consisting of a plurality of instruction element data sets IEDS each representing a particular instruction element IE of the instruction format IF and generated by one or more instruction element generating units CO of the instruction format set up unit IFSET. The fact that each instruction element generating unit will produce a separate instruction element and thus a separate instruction element data set is also apparent from Fig. 6 which shows the relationship between the set up unit IFSET and a tree structure in an instruction format configuration file IFCFG of the screen registry IREG.

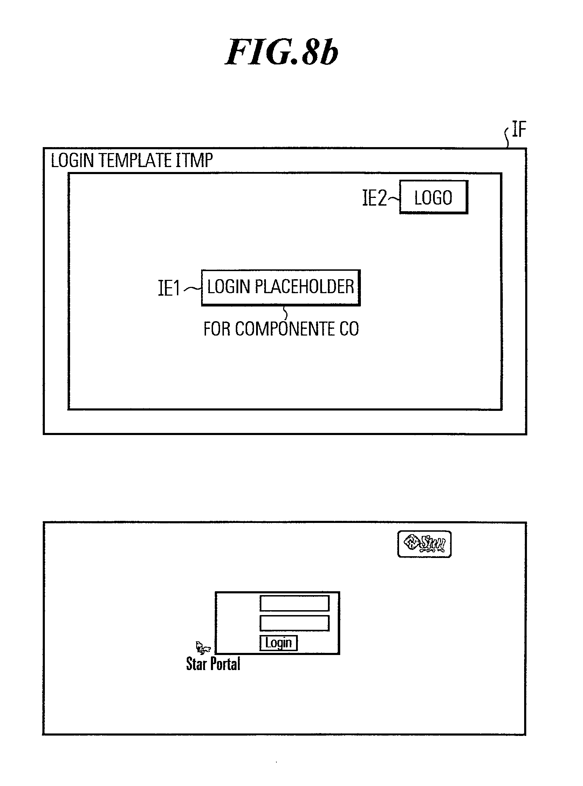

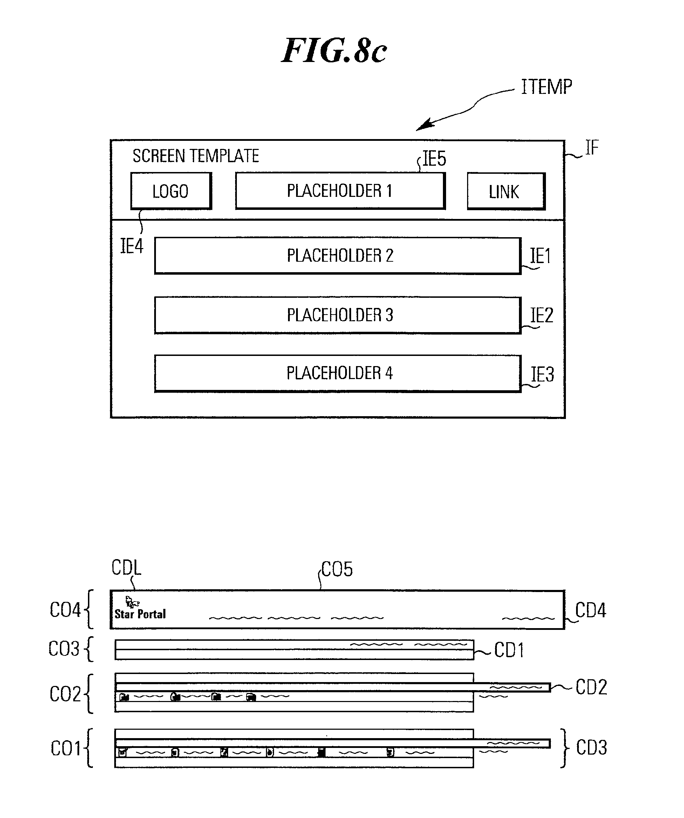

In particular, Fig. 6 shows details of the instruction format configuration file IFCGF shown in Fig. 5d and in Fig. 8. In particular, the configuration file IFCFG contains a tree data structure TRE consisting of a plurality of instruction format nodes N0, N1, N2,; H1, H1,1, H1.2, H1.3. Each instruction node NO indicates a particular combination of instruction elements IE1, IE2; IE1, IE2, IE3, IE4, IE5 associated with each node. Furthermore, each node has associated with it a node selection criterion N1SEL, H1SEL, N2SEL, H1.1SEL, H1.2SEL, H1.3SEL. The top node N0 which is the entry node into the tree structure TRE provides a default instruction format, i.e. also the entry node N0 has associated with it a number of instruction elements, however, since this is the node where the search procedure is started, there is no need to assign to it a special selection criterion, because it is always selected.

As shown with the double-arrow in Fig. 6, each instruction element IE is associated with a corresponding instruction element generating unit CO in the instruction format set up unit IFSET.

In the operation S7, as shown in Fig. 7b, the instruction format selection unit IFSEL searches the tree data structure TRE with the determined content data request properties CDPP and it selects an instruction format node H1.1 whose associated node selection condition H1.1SEL matches said determined content data request properties CDPP.

In accordance with one embodiment, the content data request property provider unit CDPP provides all the properties before the actual searching operation in S7, namely with the operations S3, S4, S5 and S6 before the actual search operation starts.

In accordance with another embodiment, the instruction format selection unit IFSEL sequentially goes from node to node (as will explained below with more details) and will at each node look at its selection criterion N1SEL, N2SEL ..., and only when performing the special test as to whether or not the criterion is fulfilled, it will ask or inquire at the property provider unit CDPP to provide a certain property of interest which needs to be compared with one of the properties requested in the selection criterion.

In the latter embodiment, the provider unit will on request provide the properties such that processing time and memory space can be saved since there is no requirement to always keep all properties that could possibly be of interest in the memories MEM1, MEM2.

After finding the appropriate node and by doing so also finding the appropriate instruction element generating units CO relating to the indicated instruction elements, in operation S8 shown in Fig. 7b the instruction data set IDS is prepared by executing the instruction element generating units CO of the selected instruction format node NO. Thus, after the operation S8 the complete instruction data set has been flexibly set up by unit of only executing generation units CO, which have been found on the basis of the properties of the content data request, i.e. on the basis of searching the tree with the properties to find a matching criterion in one of the nodes.

Therefore, this generated instruction data set IDS can now be sent from the server unit to the client unit in operation S9, S10 (corresponding to the operations ST6, ST7 in Fig. 3) and the user can display or use the instruction data set IDS in the operation and if more content data is requested (YES) in the operation S12 the procedure is started anew with the operation S2 in Fig. 7a (operations S10, S11, S12 correspond to the operations ST7, ST8, ST9 in Fig. 3). If no more content data needs to be requested the communication link CL is closed in the operation S13 (corresponding to operation ST10 in Fig. 3).

The examples in Fig. 8b, 8c related to the case where, for example, the node N1 and the node H1.1 were selected in the selection procedure shown in Fig. 6.

As will be noted from Fig. 8b, the lower diagram is similar to the screen diagram shown in Fig. 4. However, it has been differently set up via the flexible screen or instruction format adaption by the screen/instruction registry IREG of the invention as explained above with the selection procedure in Fig. 6 and 7b. That is, whilst in Fig. 4 the screen format IF or the format of the data set was fixed and completely independent of the properties, the screen format IF shown in Fig. 8b was selected by specially searching for the node N1 with properties which match the selection criterion N1SEL. For example, the instruction element generating units CO1, CO2 could be responsible for generating the log-in window and the logo shown in the lower half of Fig. 8b. The upper half in Fig. 8b shows the logical generation of this adaptive screen format IF. Therefore, whilst the screens in Fig. 8b and Fig. 4 look very similar, they have been generated on the basis of different procedures. In particular, the screen in Fig. 8b was generated by executing special generation units of a specially selected node N1.

Likewise, the example in Fig. 8c could be an example for arriving at the node H1.1 in Fig. 6. As shown in Fig. 6, if the selection criterion H1.1SEL is fulfilled, then the instruction element generation units CO1, CO2, CO3, CO4, CO5 are executed for forming the editing screen shown in the lower half of Fig. 8c. The upper half in Fig. 8c again shows the instruction data set having the particular format IF together with the instruction elements IE1, IE2, IE3, IE4, IE5.

As will now be apparent from the above description, the screens obtained, for example, in Fig. 8b and 8c have been generated flexibly, namely dependent on the properties which match a particular selection criterion of a node in the tree structure TRE. Another embodiment of the invention, where not only the instruction element generation units CO are determined in the tree structure TRE but also the positions are determined into which these instruction element generation units will insert their data will be described further below.

The tree structure of nodes can, in accordance with one embodiment, already be stored permanently in the configuration file, to be used commonly for all client units whenever they send a content data request message with appropriate parameters allowing e.g. the property determination.

In accordance with another embodiment, it is possible to set a new tree structure e.g. when a new request message is received in the server unit. This new tree structure is then used either only for the client unit which issued the request or for all client units.

In accordance with yet another embodiment, it is also possible that the tree structure is flexibly set, i.e. set in accordance with the determined properties. Thus, one of more appropriate tree structures can be loaded into the processor (i.e. one of several XML files containing such a tree structure).

Furthermore, in accordance with yet another embodiment, it is also possible that there is a cross-connection or cross-link between several pre-stored tree structures. In this case, for example, if the procedure finds a valid node, i.e. a node whose selection condition is fulfilled by the enquired and provided properties, then a switch could be made from this node (called a tree switch node) to a node of another different tree structure whose nodes are subsequently searched. It is also possible, during the tree search procedure, to jump back and forth between two or more available tree structures.

Next, we will first describe a more particular embodiment how the procedure runs through the tree structure TRE in order to find the appropriate node.

### FINDING AN APPROPRIATE CHILD NODE

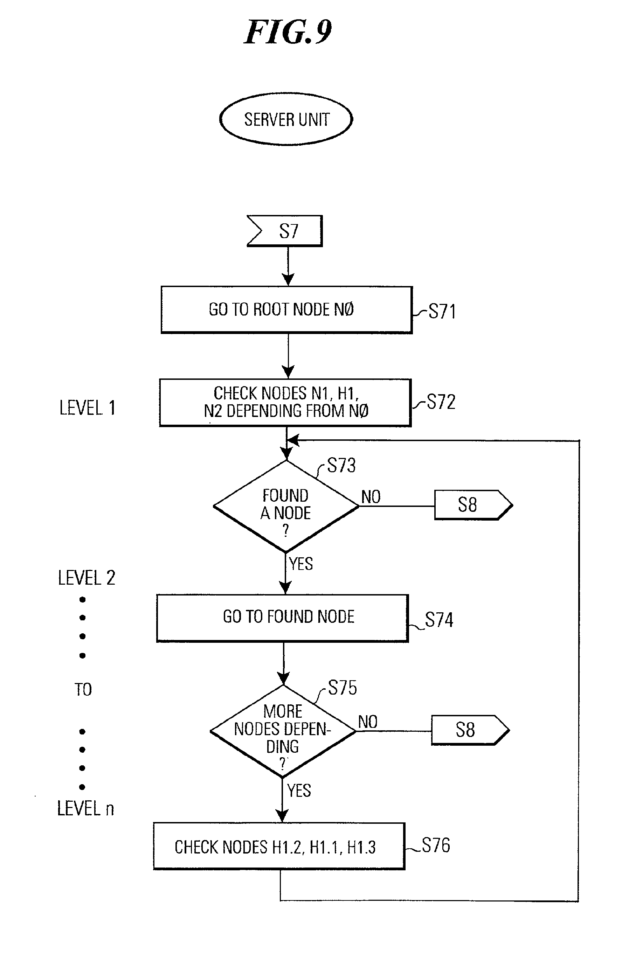

Hereinafter, the selection procedure P1, P2, P3, P4, P5, P6 executed in the operation S7 in Fig. 7b will be explained with more detail in Fig. 9.

In the operation S71 the instruction format selection unit IFSEL starts the search at the root instruction format node RNO. In the operation S72 the selection unit IFSEL checks all nodes N1, H1, N2... depending from the root node NO. As shown in Fig. 6, the currently available content data request properties failed to match the criterion N1SEL of the node N1 and therefore, the procedure next checks the selection criterion H1SEL of the next depending node H1 (see the processing flow P1, P2, P3). When checking all the nodes N1, H1, N2 in the operation S72, the instruction format selection unit IFSEL requests from the property provider unit CDPP for the current contents data request CDRQ a property relating to a property name parameter NME (explained with more details below) or a node selection condition of the respective next node.

If no node with a matching criterion is found in the operation S73, then the procedure goes to the operation S8 in Fig. 7b. The operation S8, the respective generation units CO associated with the root node RNO are executed because, although the root node RNO has not associated with it a selection criterion, it also is associated with some instruction elements IE and thus with some instruction element generation units CO. As will be understood below, the root node can produce a default instruction format with an instruction template in the plurality of instruction element positions into which the instruction element generating units CO can insert instruction element data sets when they have been executed.

Returning to Fig. 9, if a matching criterion, i.e. a next valid node, is found in the operation S73, the procedure goes to the operation S74 where the next node with the matching criterion H1 is approached. In the operation S75, it is tested whether the node A1 is a child node, i.e. whether there are any further nodes depending from it or not. If there are no further nodes depending (NO in the operation S75), then the instruction element generation units CO associated with the instruction elements IE of the child node H1 are executed by the server processing unit in the operation S8.

If there are still more nodes depending from the node H1, as is the case in Fig. 6, then the selection unit checks further dependent nodes H1.2, H1.2, H1.3 in the operation S76. Then again operation S73 is carried out in order to find whether a matching node is found. As shown in Fig. 6, the loop of operations S73, S74, S75, S76 is carried out once more (paths P4, P5, P6; the dotted line always indicates when no match was found at the respective depending node). Thus, the procedure selects the node H1.1. in level 2, because it is a child node (no further depending nodes) and the selection criteria was matched by the provided properties.

Depending on the depth of the tree, up to n iterations in the loop may have to be carried out until a valid child node is found.

### INHERITING FEATURES FROM A PREVIOUS NODE

Above it was described that in a case where no further depending nodes are detected and the selection criterion is fulfilled, a screen or instruction format will be set up with the corresponding generation units. In this case, the generation units are those generation units belonging to the node, which have been found with a matching criterion. That is, the instruction format and thus the instruction data set will be fully generated by the generation units belonging to this particular node.

However, in accordance with another embodiment, a depending node may also inherit some of the instruction element or instruction element generation units from a previous node through which the selection procedure ran.

Such an inheritance function is particularly advantageous for embodiments in which the instruction format is composed of two parts, namely of an instruction template ITEMP and a plurality of instruction element positions IEP into which the respective instruction element generating units CO insert instruction element data sets which in combination form the instruction data set IDS. The purpose of such a two part division of the instruction format IF may easily be understood with reference to the example in Fig. 8c.

That is, in Fig. 8c a first set of instruction elements may merely be responsible for forming a so-called instruction template (as also shown in Fig. 8b). As explained, this instruction template ITEMP will again be generated by one or more associated instruction element generating units, i.e. these generation units will set up a template with a number of placeholders IE1, IE2, IE3, IE4 which define the positions where later on further instruction element generating units will insert content data retrieved from the data base DB.

The difference between the template part and the second part, which inserts the data, can be understood with an example. For instance, the template ITEMP shown in Fig. 8c may set up the positions where in principle yellow (IE1), green (IE2) and red (IE3) cards will be placed. The template only specifies the principal positions where they should be located. Now, in a second part an actual yellow, green and red card is placed in the instruction or screen elements IE1, IE2, IE3, for example by an appropriate instruction element generation unit relating to yellow, red and green cards. That is, in a second part the instruction element generation units will insert the respective "yellow", "red" and "green" data.

On the basis of understanding the division into an instruction template and an element data insertion at the placeholders (provided by the template), the function of inheritance can easily be understood. Of course, the root node RN0 in Fig. 6 has a default screen or instruction template into which instruction elements of the same root node will insert data if no further depending valid nodes are detected (NO in the operation S73).

On the other hand, the node N2 in Fig. 6, which is a child node, may not contain a screen template but only some instruction element generation unit to be used in connection with the node N2. In this case, the template would be missing and the instruction element generation units would not know at which position to insert their data. Therefore, the node N2 inherits the screen or instruction template from the root node NO if it itself cannot provide such a template.

As another example, the selected child node H1.1 may not have an instruction template specification but the previous node H1 one level up contains such a template specification. As mentioned before, the only reason why the node H1 was not selected is because there where further dependency nodes. On the other hand, the selection criterion was indeed fulfilled with the currently available property. Therefore, in case a screen template or instruction template is missing at a valid child node, the selection procedure runs back through all previous valid nodes until it finds a valid node (i.e. a node with a matching criterion) which contains the necessary screen or instruction template. For example, it may be the case that also the node H1 has itself no template specification such that in this case the default template specification of the node N0, which will always be valid, is used. Thus, the screen template "further up the tree" is passed on/to (inherited by) nodes "further down the tree."

According to another embodiment, it is indeed envisaged that the set up of an instruction format is not limited to a first part of a template and a second part of inserting the data at the template placeholder positions. It could be imagined that an instruction format or screen format consists of a large number of different parts and also in this case a part specified in a previous node, which has been detected as valid can be inherited downwards to any child node.

In accordance with another embodiment, it is of course also possible that several parts or specifications are inherited downwards to a child node. Thus, the inheritance procedure has a particular advantage that it is not necessary to perform all specifications in all nodes because specifications from higher nodes upwards can be taken over (inherited) at lower nodes.

Speaking about the division of the instruction format in an instruction template and a plurality of instruction element positions, in accordance with one embodiment, when the instruction data set is a set of instruction data for displaying a screen with a particular screen layout format on the client unit display unit DSP, the instruction template ITEMP is a screen layout template SCRN and said instruction element positions are placeholders on the screen into which the respective instruction element generating units insert screen element data sets when they are executed.

Alternatively, in accordance with another embodiment, when the instruction data set IDS relates to a set of instruction date for controlling a device with a particular control command layout on the client unit CU, for example a robot, the instruction template ITEMP is a command layout template and the instruction element positions are command holders, into which the instruction element generating units insert command data sets when they are executed.

Therefore, it should be understood that the concept of a template and the position holders is not restricted to data sets which use graphics data but can by used for any other data sets, which the user wants to use at the client unit for other purposes, such as control purposes, printing purposes etc.

### SCREEN TEMPLATE / SELECTION CRITERION / GENERATION UNITS - JAVA IMPLEMENTATION

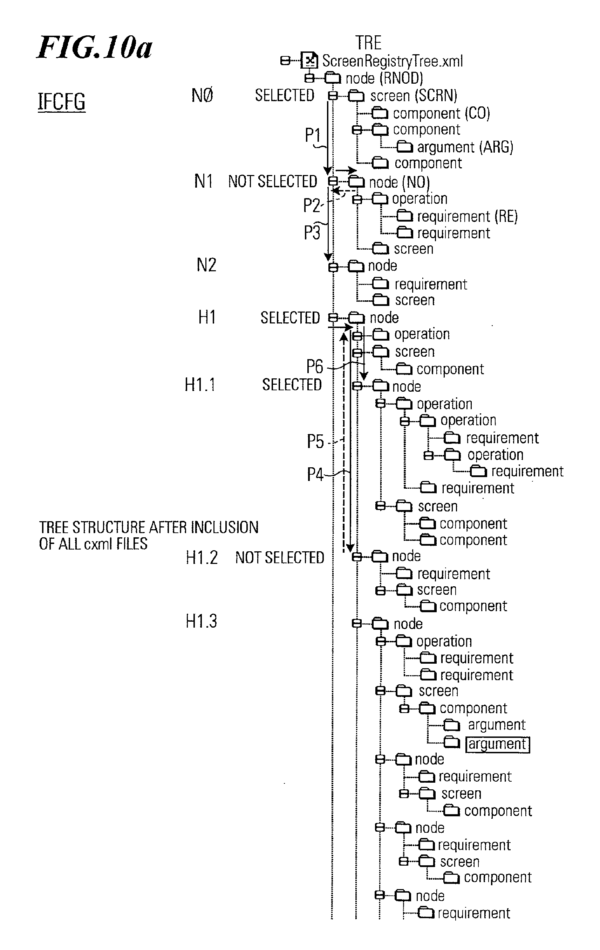

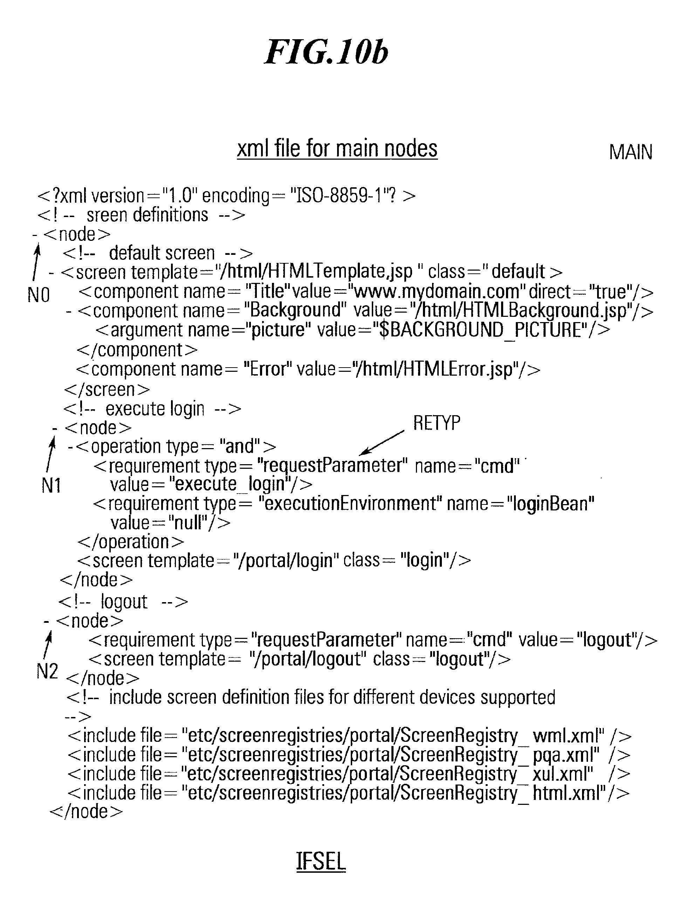

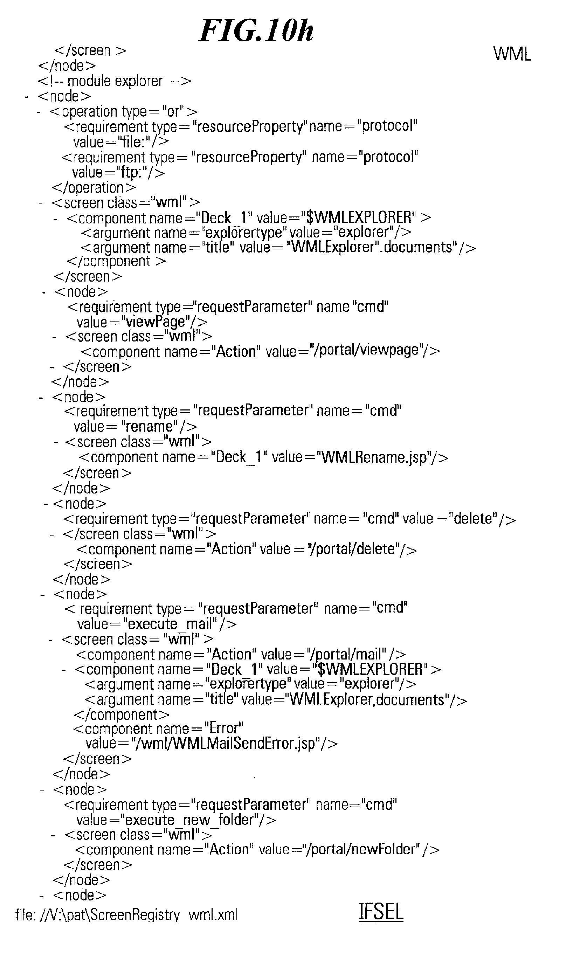

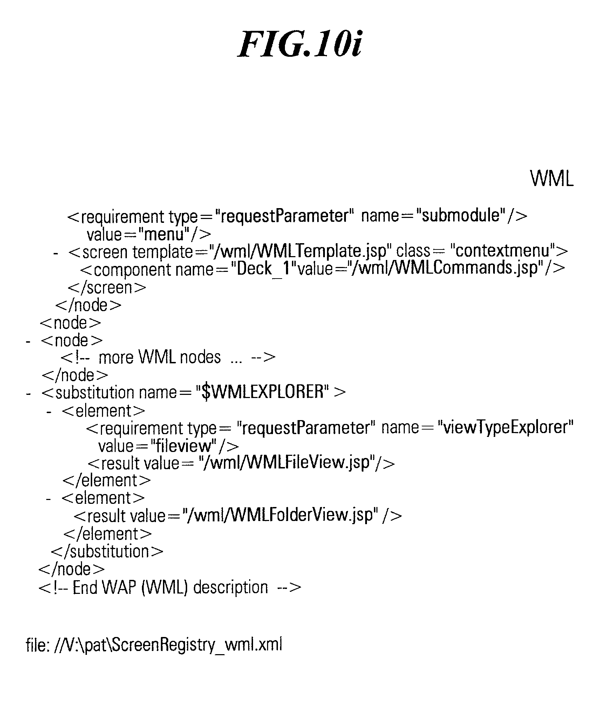

Hereinafter, with reference to Fig. 10a and Fig. 10b another embodiment is described in which the selection unit IFSEL and the screen registry are implemented as XML files in JAVA. However, it should be noted that the usage of the screens, components, arguments, requirements and substitutions explained below are not restricted to an implementation in JAVA and corresponding functions can be found in other implementations. Therefore, the JAVA implementation below only serves as a good example for illustrating some further features and functions of further embodiments. In Fig. 10a, 10b the same designation of nodes, selection criteria and instruction element generation units as in Fig. 6 are used. A thick line in Fig. 10a illustrates a possible search scenario, similar to the path P1, ..., P6 in Fig. 6.

As shown in Fig. 10a, the tree data structure comprises a plurality of nodes NO, for example the nodes N0, N1, N2; H1, H1.1, H1.2, H1.3 which are arranged in a tree structure, i.e. from the node N0 the nodes N1, N2, H1 are branched off and in turn the nodes H1.1, H1.2, H1.3 are branched off from the node H1. In this respect, the tree structure is similar to the one shown in Fig. 6.

Furthermore, the tree structure comprises screens SCRN, components CO, arguments ARG and possibly substitutions SUB (a substitution is, however, not shown in Fig. 10a because it is not needed here).

As will be understood with reference to Fig. 10b showing a JAVA implementation of the instruction format selection unit IFSEL, a screen SCRN is basically the definition of the screen (instruction) template ITEMP. As can be seen from Fig. 10b, the root node RNOD defines a default screen with a JAVA server pages program "HTMLTemplate.jsp". Thereafter, there are two component names "title" and "background", which essentially correspond to instruction element generating units CO used for building up the elements (placeholders) of the screen template. As mentioned above, a template is to be understood as providing a format together with instruction element positions (placeholders) into which other instruction element generating units can then insert their data.

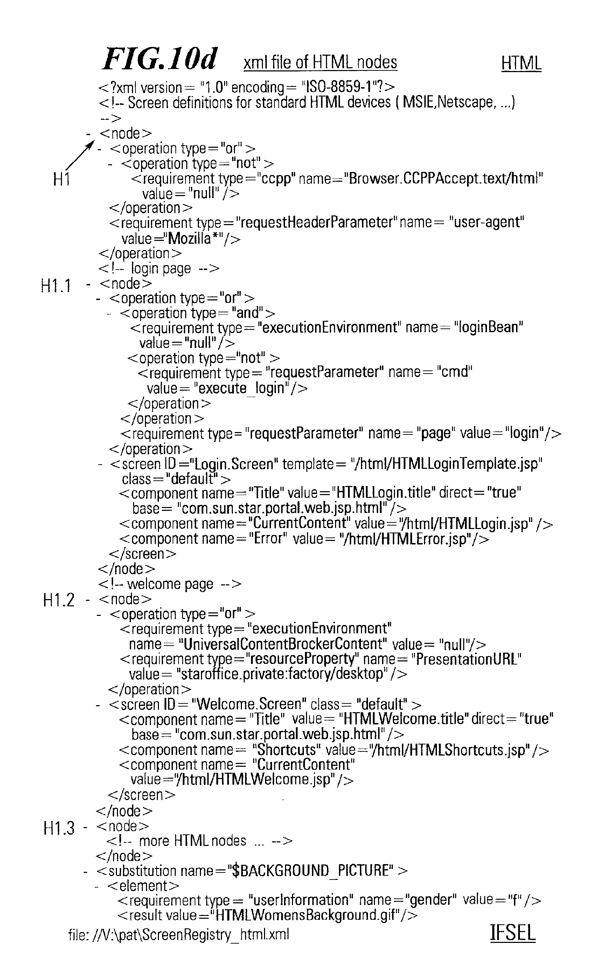

The two component names are followed by an argument name "picture". Like normal arguments in any programming language, a value of this argument "$BACKGROUND_PICTURE" is still undefined at this stage. When the actual screen template is executed, this value is set with a subprogram request via a substitution name, which is shown in Fig. 10d at the bottom.

Furthermore, the screen template comprises a further component with a component name "error", wherein a program "/html/HTMLError.jsp" is executed when there is an error in the default screen template. As can be seen from comparing the code section for the node N0 in Fig. 10b with the tree structure in Fig. 10a, the actual root node RNOD is defined by a screen, two components (wherein the second component has also an argument) and another component. The inclusion of the undefined argument is made by referring to a substitution component "$BACKGROUND_PICTURE", which is located at the node H1.3. As will be appreciated from Fig. 10a and Fig. 10b, the root node N0 is the entry node into the tree structure TRE and therefore, there is no selection condition specified, i.e. there are no requirement types, which define these selection conditions.

Proceeding to node N1, this node comprises, as shown in Fig. 10a, an operation, two requirements and a screen. As can be seen from Fig. 10b, an operation is basically a logical combination of some sub-conditions, which are defined with the requirement type. Thus, the first requirement comprises a property type parameter "requestParameter" and further comprises a name "cmd". This property type parameter RE-TYP indicates to the content data request property provider unit CDPP the type of property to be enquired. It should be noted that this is not the property itself but only the type of property, which is looked for. The actual property, which is inquired, is the "CMD" (e.g. a command). The expected value of the inquired property of the type "requestParameter" is "execute_login". The next requirement checks for the type "executionEnvironment" the response for the name "loginBean". The expected value should be "0". Furthermore, the operation type, i.e. an operation condition, is specified for logically "AND" combining the results of the two requirements. Therefore, the node N1 will be selected if the "cmd" is equal to "execute_login" and the "loginBean" is equal "0".

Furthermore, in this case the node N1 also defines a screen template which is here called "/portal/login" of the class "login". For example, this screen template could produce a login page as shown in Fig. 8b. As explained above, since the node N1 also comprises a screen template, it will not "inherit" the default screen template of the node N0.

Furthermore, the node N2, which is also depending from the root node RNOD comprises one requirement and a screen. That is, also the node N2 is associated with a selection condition which checks for name "cmd" to be having a value of "logout". If the node N2 is selected, yet another screen template (here relating to a logout screen) is selected. Therefore, if the node N2 is selected, because the return parameter from the property provider is "logout", then also the node N2 will define its own screen template and will not inherit a screen template from a node further above.

The node definition with its selection condition (requirement), template definition (screen template), logical combinations for the selection conditions (operation) and indications of instruction element generation units (components) can, in accordance with one embodiment of the invention, be implemented as XML files with a JAVA code or JAVA implemented code as shown in Fig. 10b for the main nodes N0, N1, N2.

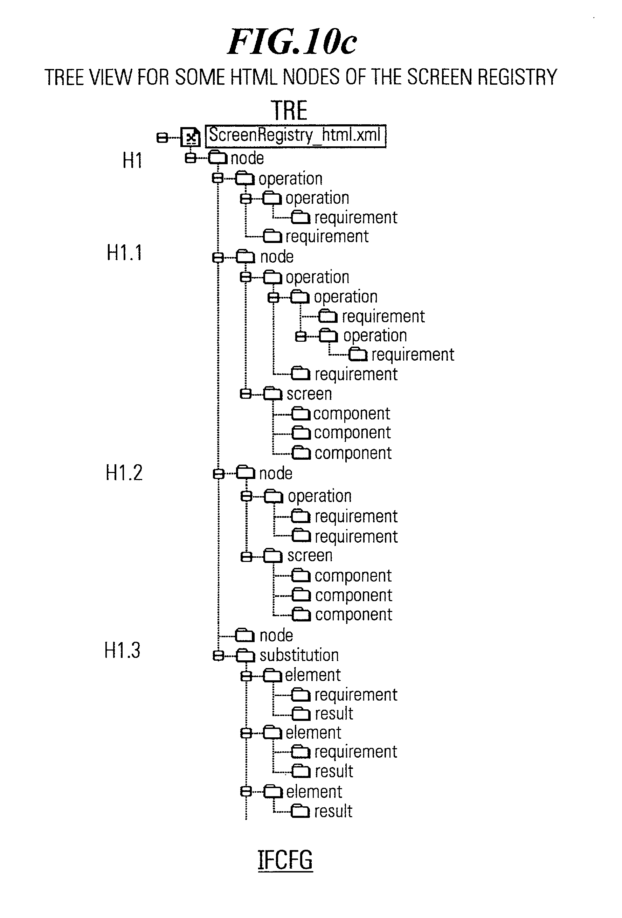

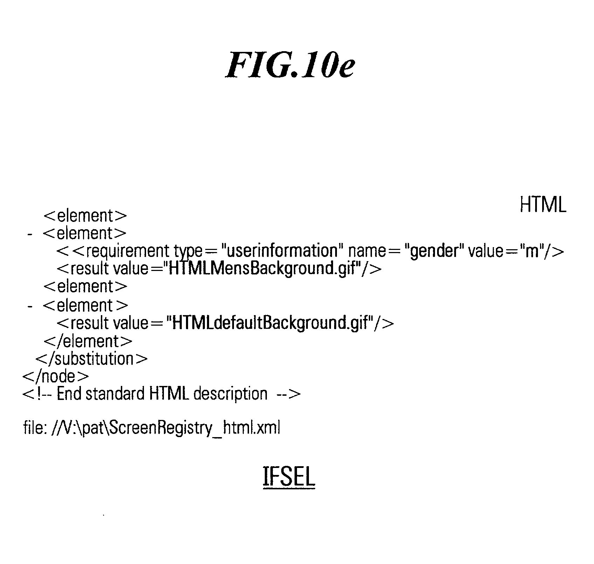

Fig. 10c and Fig. 10d show the definition of HTML nodes H1, H1.1, H1.2, H1.3. The definitions for these nodes in Fig. 10d, 10e are in the same format as the definition in Fig. 10b for the main nodes. For example, the node H1 comprises operations and requirements but it does not comprise a screen template. The node H1.1 includes a screen template "/html/HTMLLoginTimplate.jsp" and other components and requirements as shown in Fig. 10c and Fig. 10d. The node H1 and the node H1.1 will be selected if the correct properties are returned from the property provider, whenever a requirement type execution operation is to be checked within the respective nodes.

In node H1.3 a special substitution name is included, i.e. this node H1.3 provides the subprogram for an inclusion of a file in the node N0. Thus, the argument type in the node N0 can have cross-reference to the substitution name in the node H1.3. For example, in the node H1.3 a special background is set for the screen.

Among the nodes H1, H1.1, H1.2, H1.3 only the nodes H1.1 and H1.2 have a screen template definition. Therefore, should these nodes be selected during the selection procedure going through the tree structure, then these nodes will not inherit a screen template from one of the preceding valid nodes (valid = the selection condition was fulfilled but there where further child nodes to this node).

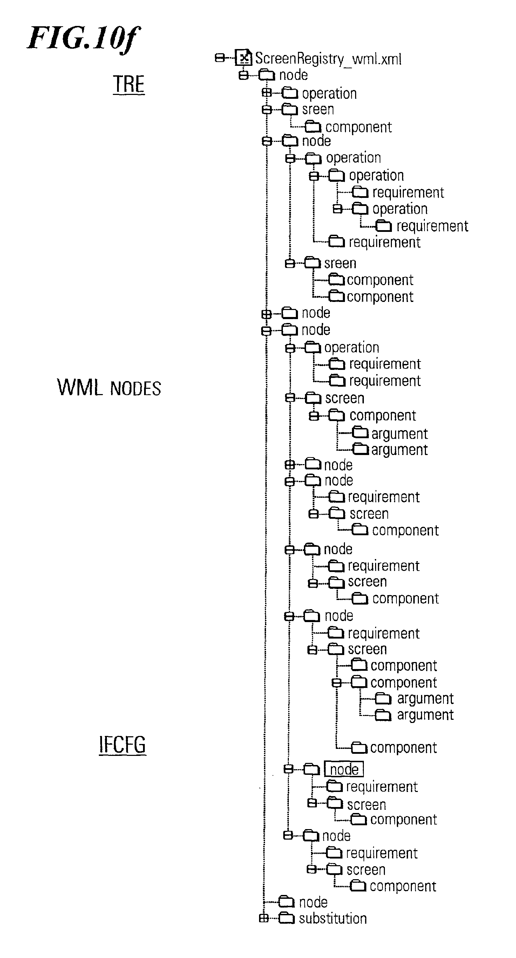

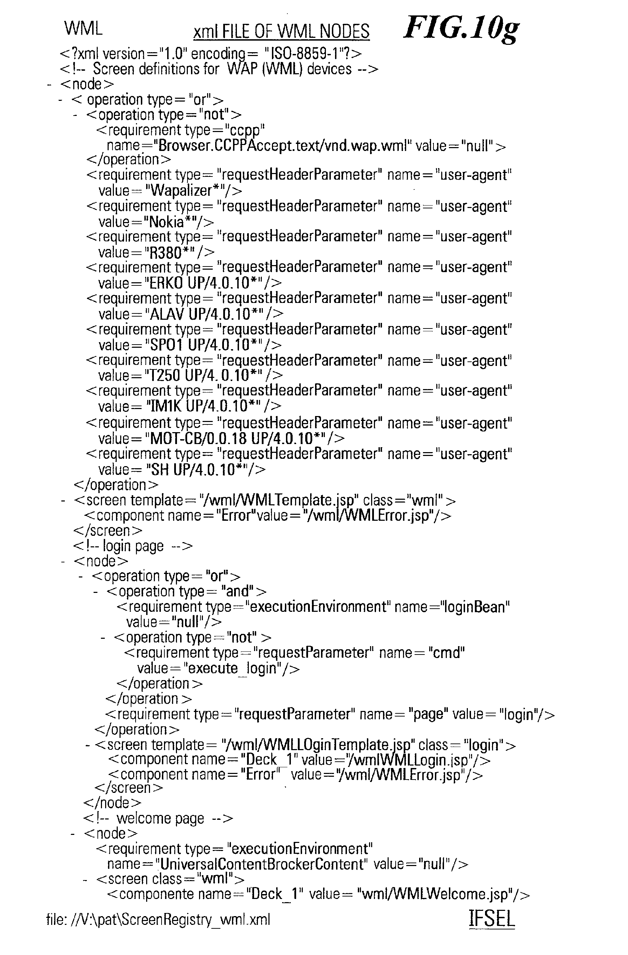

Finally, Fig. 10f shows a tree structure for WML nodes and Fig. 10g-i show the content of the information or instruction format selection unit IFSEL in the WML case. The structure of this tree is in principle similar to the structure of the four described trees, such that no further discussion is necessary here. All files for the screen registry (a tree data structure) definition can be implemented, in accordance with one embodiment of the invention, by XML files, as the skilled person will easily realize from the JAVA code in Fig. 10b, Fig. 10d and Fig. 10e.

The instruction format selection unit IFSEL can, according to one example in Fig. 10a, carry out a search procedure as the one shown in Fig. 6, namely along the search paths P1, P2, P3, P4, P5, P6 in order to select the node H1.1. If the node H1.1 is selected because the requirement types are fulfilled, then this node happened to comprise its own screen template "login.screen" and therefore in this search procedure the screen of the last above node is selected. In principle, the selection procedure will run through the nodes in a hierarchical order from level to level. However, it is of course possible that after checking the node H1, not the node H1.2 is first checked but the node H1.1. A skilled person can, on the basis of the above teachings, derive many different search scenarios by running through the tree structure in order to find a valid node.

Once the valid node has been found, the component types will indicate a respective instruction element generating unit and the component is executed in order to fill the placeholders defined with the screen template with the respective data. Thus, once a node has been selected, the specific components generate the final instruction data set to be returned to the client unit.

Therefore, it can now be understood that with the flexible set up of the tree structure in the configuration file, any type of flexible set up, for example for a screen, can be performed, essentially based on the idea of forming the screen registry as shown in Fig. 10a. The screen registry reads its data from an XML file or the configuration and obtains a tree of nodes with their requirements (conditions). Thus, each node refers to a possible screen and a screen is formed by a template jsp or a servlet with a set of argument servlets, as shown in Fig. 10b. The template describes at what positions (placeholders) the arguments are inserted in the template in the process of creating the response. The requirements describe in terms of client capabilities, the URL, request parameters etc., i.e. the above-described properties, which node to use for which request.

Therefore, the present invention can adaptively and flexibly create instruction formats, e.g. for the set up of a screen or the set up of an instruction data set, dependent on some properties derived from the content data request sent by the client unit. Thus, the actual servlets or jsps do not have to be touched and still a flexible way of setting up the instruction formats can be achieved.

### SOFTWARE / HARDWARE EMBODIMENTS

Furthermore, the features in the processing operations of the above-described embodiments may be realized by dedicated hardware or may be realized as programs including code instructions executed on data processing units. It is further possible that parts of the above processing operations are carried out in hardware, whereas other processing operations are carried out using software.

It is further noted that a computer program produced stored on a computer readable storage medium can comprise code units adapted to carry out on a server side or on the client side respectively the operations described above. Further, a computer program product may be provided comprising the computer readable medium.

A computer program can have instructions adapted to carry out at a server side or a client side the above-described operations. Furthermore, a data carrier for a server side or a client side has a computer readable storage code embodied therein, which carries out one or more of the respective above-described operations and units in the server and the client. A computer readable medium can be a magnetic or optical or other tangible medium on which a program is recorded, but can also be a signal, e.g. analogue or digital, electromagnetic or optical, in which the program is embodied for transmission.

Furthermore, the client unit may be not only a computer, but according to another embodiment it can be a general purpose data processing device, a mobile device such as a mobile telephone such as one, which is WAP compatible or a mobile organizer, a navigation device or a cash point.

### FURTHER EMBODIMENTS (CODE SECTIONS)

According to other embodiments, a server unit may be constituted as follows:
**1)** A server unit of a data processing system in which one or more client units are provided by the server unit with an instruction data set in a particular instruction format in response to a content data request, comprises:
   **a)** a content data request property provider code section for providing one or more content data request properties of the content data request made by a client unit;
   **b)** an instruction format set up code section for preparing an instruction data set having the instruction format and consisting of a plurality of instruction element data sets each representing a particular instruction element of the instruction format and generated by one or more instruction element generating code sections of said instruction format set up code section;
   **c)** an instruction format configuration file containing a tree data structure consisting of a plurality of instruction format nodes, each instruction format node indicating a particular combination of instruction elements constituting a particular instruction format and having associated with it a node selection criterion;
   **d)** an instruction format selection code section for searching said tree data structure with the determined content data request properties and for selecting an instruction format node whose associated node selection condition matches said determined content data request properties; and
   **e)** said instruction format set up code section preparing the instruction data set to be sent to the client unit by executing the instruction element generating code sections of the selected instruction format node.
**2)** A server unit according to item 1,
   ***wherein***
   said content data request property provider code section analyses said content data request to provide one or more of client unit related properties and content data related properties.
**3)** A server unit according to item 2,
   ***wherein***
   said content data request property provider code section includes:
   a device property provider for providing for each client unit as said client unit related properties device properties about the client unit device;
   a resource property provider for providing as said content data related properties resource properties about data content resources providing the content data;
   a content data requesting code section property provider for providing as said client unit related properties properties about the content data requesting code section used at the client units; and
   a command property provider for providing as said client unit related properties properties about commands issued at the client units.
**4)** A server unit according to item 2,
   ***wherein***
   said content data request property provider code section includes a first property memory for client unit related properties and a second memory for content data related properties.
**5)** A server unit according to item 4,
   ***wherein***
   said content data request property provider code section analyses a first content data request to obtain said client unit related properties and said content data related properties, wherein at the arrival of any subsequent content data request in the same session said content data request property provider only accesses said first memory or said second memory to provide said client unit related properties and/or said content data related properties.
**6)** A server unit according to item 1,
   ***wherein***
   said node selection condition comprises one or more node selection requirements including at least one property name parameter and an expected property; wherein
   said instruction format selection code section is adapted for starting the search at the root instruction format node; wherein
   said instruction format selection code section is adapted for requesting from the property provider code section for the current content data request a property relating to the property name parameter of a node selection condition of a next instruction format node; wherein
   said instruction format selection code section is adapted for branching to said next instruction format node, if the provided property match with the expected property.
**7)** A server unit according to item 6,
   ***wherein***
   said node selection requirement further comprises a property type parameter indicating the type of property to be enquired at the property provider.
**8)** A server unit according to item 6,
   ***wherein***
   said node selection condition further comprises one or more operation conditions for logically combining the results of two or more requirements.
**9)** A server unit according to item 1,
   ***wherein***
   the instruction format formed by the instruction elements of a root instruction format node of said tree data structure is a default instruction format.
**10)** A server unit according to item 9,
   ***wherein***
   the default instruction format is an instruction format with an instruction template and a plurality of instruction element positions into which the instruction element generating code sections insert instruction element data sets when they are executed.
**11)** A server unit according to item 1,
   ***wherein***
   said instruction format includes an instruction template and a plurality of instruction element positions into which the instruction element generating code sections insert instruction element data sets when they are executed.
**12)** A server unit according to item 1,
   ***wherein***
   said instruction element generating code sections include a component name of a component to be executed.
**13)** A server unit according to item 12,
   ***wherein***
   said instruction element generating code sections further include an argument name with a substitution name of a substitution component located at a different node.
**14)** A server unit according to item 11,
   ***wherein***
   said instruction data set is a set of instruction data for displaying a screen with a particular screen layout format on the client unit, wherein the instruction template is a screen layout template and said instruction element positions are place holders into which the instruction element generating code sections (CO1-CO5) insert screen element data sets when they are executed.
**15)** A server unit according to item 11,
   ***wherein***
   said instruction data set is a set of instruction data for controlling a device with a particular control command layout format on the client unit, wherein the instruction template is a command layout template and
   said instruction element positions are command holders into which the instruction element generating code sections insert command data sets when they are executed.
**16)** A server unit according to item 1,
   ***wherein***
   said client unit and said server unit are JAVA based code sections, wherein said instruction format configuration file containing said tree data structure is a JAVA XML file.
**17)** A server unit according to item 17,
   ***wherein***
   said instruction element generating code section is a JAVA servlet or a JAVA server pages program.
**18)** A data carrier for a server side having computer readable storage code embodied therein which comprises:
   **a)** a code section for providing one or more content data request properties of the content data request made by a client unit;
   **b)** a code section for preparing an instruction data set having the instruction format and consisting of a plurality of instruction element data sets each representing a particular instruction element of the instruction format and generated by one or more instruction element generating code sections of said code section for preparing an instruction data set;
   **c)** a code section containing a tree data structure consisting of a plurality of instruction format nodes, each instruction format node indicating a particular combination of instruction elements constituting a particular instruction format and having associated with it a node selection criterion;
   **d)** a code section for searching said tree data structure with the determined content data request properties and for selecting an instruction format node whose associated node selection condition matches said determined content data request properties; and
   **e)** said code section for preparing an instruction data set being adapted for preparing the instruction data set to be sent to the client unit executing the instruction element generating code sections of the selected instruction format node.
**19)** A data communication system comprising one or more server units according to one or more of items 1-17 and one or more client units.
**20)** A server unit of a data processing system in which one or more client units are provided by the server unit with an instruction data set in a particular instruction format in response to a content data request, comprising:
   **c)** an instruction format configuration file containing a tree data structure consisting of a plurality of instruction format nodes, each instruction format node indicating a particular combination of instruction elements constituting a particular instruction format and having associated with it a node selection criterion; and
   **d)** an instruction format selection code section for searching said tree data structure with content data request properties relating to a content data request sent by the client unit and for selecting an instruction format node whose associated node selection condition matches said content data request properties.
**21)** A server unit of a data processing system in which one or more client units are provided by the server unit with an instruction data set in a particular instruction format, wherein the server unit is adapted to make the instruction format of the instruction data set flexibly dependent on the capabilities of the client unit and/or the properties of the content data.
**22)** A server unit of a data processing system in which one or more client units are provided by the server unit with an instruction data set in a particular instruction format, wherein the server unit is adapted to make the generation and retrieval of the content data and its format flexibly dependent on properties of the client unit and/or the properties of resource code sections which provide said content data.
**23)** A server unit according to item 22,
   ***wherein***
   said server unit comprises, for the flexible generation and retrieval of the content data, a selection code section adapted to select from a number of instruction format templates a particular instruction format template dependent on client properties and/or resource properties, wherein said template describes at what places in the instruction data set particular instruction elements can be placed; and
   one or more instruction element generating code sections adapted for inserting content data in the places indicated in the instruction format template; wherein
   the selection code section also selects the one or more instruction element generating code sections in accordance with the client capabilities or resource capabilities, from several available instruction element generating code sections.
**24)** A server unit of a data processing system in which one or more client units are provided by the server unit with an instruction data set in a particular instruction format, wherein the server unit comprises:
   a selection code section adapted to select from a number of instruction format templates a particular instruction format template dependent on client properties and/or resource properties, wherein said template describes at what places in the instruction data set particular instruction elements can be placed; and
   one or more instruction element generating code sections adapted for inserting content data in the places indicated in the instruction format template; wherein the selection code section also selects the one or more instruction element generating code sections in accordance with the client capabilities or resource capabilities, from several available instruction element generating code sections.
**25)** A server unit of a data processing system in which one or more client units are provided by the server unit with an instruction data set in a particular instruction format, wherein the server unit is adapted to make the instruction format of the instruction data set flexibly dependent on the properties of the client unit and/or the properties of the requested content data obtained by a content data request property provider code section which is adapted to analyse a content data request from the client unit to provide said one or more client unit related properties and content data related properties.
**26)** A server unit of a data processing system in which one or more client units are provided by the server unit with an instruction data set in a particular instruction format, wherein the server unit is adapted to make the instruction format of the instruction data set flexibly dependent on client unit related properties stored in a first property memory and/or content data related properties stored in a second memory.
**27)** A server unit of a data processing system in which one or more client units are provided by the server unit with an instruction data set, wherein the server unit is adapted to make the provision of the instruction data set dependent on searching a tree structure in a configuration file with some client unit related and/or content data related properties, wherein each node in the tree structure generates the instruction data set in a different instruction format.
**28)** A server unit of a data processing system in which one or more client units are provided by the server unit with an instruction data set, wherein the server unit is adapted to make the provision of the instruction data set dependent on searching a tree structure in an XML configuration file with some client unit related and/or content data related properties, wherein each node in the tree structure generates the instruction data set in a different instruction format with a screen template generated by a template JSP (JAVA Server pages) or a servlet with a set of argument servlets and describing at what positions the arguments are to be inserted in the template.
**29)** A server unit according to item 27, wherein said tree structure is generated separately for each session between the client unit and the server unit.
**30)** A server unit according to item 27, wherein said tree structure is generated once and independently for each session between the client unit and the server unit.
**31)** A server unit according to item 27, wherein said tree structure is generated dependent on client-related properties and/or content data properties.
**32)** A server unit of a data processing system in which one or more client units are provided by the server unit with an instruction data set, wherein the server unit is adapted to determine client unit related properties and content data related properties by analysing a content data request form the client unit.

### INDUSTRIAL APPLICABILITY

As was explained above, the invention is usable in a data communication system, in which a server and at least one client unit perform a data communication in order to provide the client unit with an instruction data set in a flexible manner, in particular dependent on properties, which are derivable from the content data request sent by the client unit. Although heretofore some references were made to the servers and clients implemented in a JAVA environment, it should be noted that the invention is equally well applicable to any other data communication system, in which a main computer and a sub-computer communicate. The invention is also not restricted to the case, where the client is a computer and the invention can in particular be used in environments, where the client unit is a mobile telephone such as a WAP compatible mobile telephone.

Furthermore, it should be noted that the present invention is not limited to the specific embodiments described herein and that a skilled person can carry out various modifications and variations on the basis of the teachings herein. In particular, the invention can comprise embodiments, which result from a combination of features and operations, which have been described separately in the claims and in the specification. Therefore, the invention is only defined by the scope of the attached claims.

Reference numerals in the claims only serve clarification purposes and do not limit the scope of these claims.

## Claims

**1.** A server unit (SERV) of a data processing system (SYS) in which one or more client units (CU) are provided by the server unit (SERV) with an instruction data set (IDS) in a particular instruction format (IF) in response to a content data request (CDRQ), comprising:
**a)** a content data request property provider unit (CDPP) for providing one or more content data request properties (CDPP) of the content data request (CDRQ) made by a client unit (CU);
**b)** an instruction format set up unit (IFSET) for preparing an instruction data set (IDS) having the instruction format (IF) and consisting of a plurality of instruction element data sets (IEDS) each representing a particular instruction element (IE) of the instruction format (IF) and generated by one or more instruction element generating units (CO, ARG, SUB) of said instruction format set up unit (IFSET) ;
**c)** an instruction format configuration file (IFCFG) containing a tree data structure (TRE) consisting of a plurality of instruction format nodes (N0; N0, N1, N2; H1, H1.1, H1.2, H1.3;), each instruction format node (NO) indicating a particular combination of instruction elements (IE) constituting a particular instruction format (IF) and having associated with it a node selection criterion (OP, RE, VAL);
**d)** an instruction format selection unit (IFSEL) for searching said tree data structure (TRE) with the determined content data request properties (CDPP) and for selecting an instruction format node (IFNO) whose associated node selection condition ((OP, RE, VAL) matches said determined content data request properties (CDPP); and
**e)** said instruction format set up unit (IFSET) preparing the instruction data set (IDS) to be sent to the client unit (CU) by executing the instruction element generating units (CO, ARG, SUB) of the selected instruction format node (NO).

**2.** A server unit (IERV) according to claim 1,
***wherein***
said content data request property provider unit (CDPP) analyses said content data request (CDRQ) to provide one or more of client unit related properties (DPP, RQRM, CMDPP) and content data related properties (RESPP).

**3.** A server unit (SERV) according to claim 2,
***wherein***
said content data request property provider unit (CDPP) includes:
a device property provider (DPP) for providing for each client unit (CU) as said client unit related properties device properties about the client unit device (CU) ;
a resource property provider (RESPP) for providing as said content data related properties resource properties about data content resources (CDRES) providing the content data (CD);
a content data requesting unit property provider (RQRM) for providing as said client unit related properties properties about the content data requesting unit (RQRM) used at the client units; and
a command property provider (CMDPP) for providing as said client unit related properties properties about commands issued at the client units (CU).

**4.** A server unit (SERV) according to claim 2,
***wherein***
said content data request property provider unit (CDPP) includes a first property memory (MEM1) for client unit related properties and a second memory (MEM2) for content data related properties.

**5.** A server unit (SERV) according to claim 4,
***wherein***
said content data request property provider unit (CDPP) analyses a first content data request (CDRQ) to obtain said client unit related properties and said content data related properties, wherein at the arrival of any subsequent content data request (CDRQ) in the same session said content data request property provider (CDPP) only accesses said first memory (MEM1) or said second memory to provide said client unit related properties and/or said content data related properties.

**6.** A server unit (SERV) according to claim 1,
***wherein***
said node selection condition (IELC) comprises one or more node selection requirements (RE) including at least one property name parameter (NME) and an expected property (NME); wherein
said instruction format selection unit (IFSEL) is adapted for starting the search at the root instruction format node (RNO); wherein
said instruction format selection unit (IFSEL) is adapted for requesting from the property provider unit (CDPP) for the current content data request (CDRQ) a property relating to the property name parameter (NME) of a node selection condition (H1SEL) of a next instruction format node (NO); wherein
said instruction format selection unit (IFSEL) is adapted for branching to said next instruction format node (NO), if the provided property match with the expected property (NME).

**7.** A server unit (SERV) according to claim 6,
***wherein***
said node selection requirement (RE) further comprises a property type parameter (RE-TYP) indicating the type of property to be enquired at the property provider (CDPP).

**8.** A server unit (SERV) according to claim 6,
***wherein***
said node selection condition (N1SEL) further comprises one or more operation conditions (OP) for logically combining the results of two or more requirements (RE).

**9.** A server unit (SERV) according to claim 1,
***wherein***
the instruction format (IF) formed by the instruction elements (IE) of a root instruction format node (RNOD) of said tree data structure (TRE) is a default instruction format (IDFLT).

**10.** A server unit (SERV) according to claim 9,
***wherein***
the default instruction format (IDFLT) is an instruction format (IF) with an instruction template (ITEMP, SCRN) and a plurality of instruction element positions (IEP) into which the instruction element generating units (CO) insert instruction element data sets (IEDS) when they are executed.

**11.** A server unit (SERV) according to claim 1,
***wherein***
said instruction format (IF) includes an instruction template (ITEMP, SCRN) and a plurality of instruction element positions (IEP) into which the instruction element generating units (CO, ARG, SUB) insert instruction element data sets (IEDS) when they are executed.

**12.** A server unit (SERV) according to claim 1,
***wherein***
said instruction element generating units (CO, ARG, SUB) include a component name (CO-NME)of a component to be executed.

**13.** A server unit (SERV) according to claim 12,
***wherein***
said instruction element generating units (CO, ARG, SUB) further include an argument name (ARG-NME) with a substitution name (SUB-NAME) of a substitution component (SUB-CO; $) located at a different node (NO).

**14.** A server unit (SERV) according to claim 11,
***wherein***
said instruction data set (IDS) is a set of instruction data for displaying a screen with a particular screen layout format (IF) on the client unit(CU), wherein the instruction template (ITEMP, SCRN) is a screen layout template (SCRN) and said instruction element positions (IEP) are place holders (IEP1-IEP5) into which the instruction element generating units (CO1-CO5) insert screen element data sets when they are executed.

**15.** A server unit (SERV) according to claim 11,
***wherein***
said instruction data set (IDS) is a set of instruction data for controlling a device with a particular control command layout format (IF) on the client unit(CU),
wherein the instruction template (ITEMP, SCRN) is a command layout template (SCRN) and said instruction element positions (IEP) are command holders (IEP1-IEP5) into which the instruction element generating units (CO1-CO5) insert command data sets when they are executed.

**16.** A server unit (SERV) according to claim 1,
***wherein***
said client unit (CU) and said server unit (IERV) are JAVA based units, wherein said instruction format configuration file (IFCFG) containing said tree data structure (TRE) is a JAVA XML file.

**17.** A server unit (SERV) according to claim 17,
***wherein***
said instruction element generating unit (CO) is a JAVA servlet or a JAVA server pages program.

**18.** A method in a data processing system (DPS) for providing one or more client units (CU) by a server unit (SERV) with an instruction data set (IDS) in a particular instruction format (IF) in response to a content data request (CDRQ), comprising:
**a)** providing one or more content data request properties (CDPP) of a content data request (CDRQ) made by a client unit (CU) ;
**b)** preparing an instruction data set (IDS) having the instruction format (IF) and consisting of a plurality of instruction element data sets (IEDS) each representing a particular instruction element (IE) of the instruction format (IF);
**c)** searching a tree data structure (TRE) stored in an instruction format configuration file (IFCFG) and consisting of a plurality of instruction format nodes (N0; N0, N1, N2; H1, H1.1, H1.2, H1.3; INCL), each instruction format node (NO) indicating a particular combination of instruction elements (IE) constituting a particular instruction format (IF) and having associated with it a node selection criterion (OP, RE, VAL), with the determined content data request properties (CDPP) and for selecting an instruction format node (IFNO) whose associated node selection condition ((OP, RE, VAL) matches said determined content data request properties (CDPP); and
**d)** preparing the instruction data set (IDS) to be sent to the client unit (CU) by executing instruction element generating units (CO, ARG, SUB) of the selected instruction format node (NO).

**19.** A method according to claim 18,
***further comprising:***
analysing a first content data request (CDRQ) to obtain and store properties in a memory (MEM1, MEM2) and, at the arrival of a subsequent content data request (CDRQ) in the same session, accessing said memory (MEM1, MEM2) for providing said properties.

**20.** A method according to claim 18,
***further comprising:***
said node selection condition (IELC) comprising one or more node selection requirements (RE) including at least one property name parameter (NME) and an expected property (NME); and
starting the search at a root instruction format node (RNOD);
requesting from a property provider unit (CDPP) for the current content data request (CDRQ) a property relating to the property name parameter (NME) of a node selection condition (IELC) of a next instruction format node (NO); and
branching to said next instruction format node (NO) if the provided property match with the expected property (NME).

**21.** A computer program product stored on a computer readable storage medium to be executed on a server side comprising code units adapted to carry out respectively all the steps of claim 18.

**23.** A program having instructions adapted to carry out on a server side the following steps:
**a)** providing one or more content data request properties (CDPP) of a content data request (CDRQ) made by a client unit (CU) ;
**b)** preparing an instruction data set (IDS) having the instruction format (IF) and consisting of a plurality of instruction element data sets (IEDS) each representing a particular instruction element (IE) of the instruction format (IF);
**c)** preparing an instruction format configuration file (IFCFG) containing a tree data structure (TRE) consisting of a plurality of instruction format nodes (N0; N0, N1, N2; H1, H1.1, H1.2, H1.3; INCL), each instruction format node (NO) indicating a particular combination of instruction elements (IE) constituting a particular instruction format (IF) and having associated with it a node selection criterion (OP, RE, VAL);
**d)** searching said tree data structure (TRE) with the determined content data request properties (CDPP) and for selecting an instruction format node (IFNO) whose associated node selection condition ((OP, RE, VAL) matches said determined content data request properties (CDPP); and
**e)** preparing the instruction data set (IDS) to be sent to the client unit (CU) by executing instruction element generating units (CO, ARG, SUB) of the selected instruction format node (NO).

**24.** A data carrier for a server side having computer readable storage code embodied therein which comprises:
**a)** a unit (CDPP) for providing one or more content data request properties (CDPP) of the content data request (CDRQ) made by a client unit (CU);
**b)** a unit (IFSET) for preparing an instruction data set (IDS) having the instruction format (IF) and consisting of a plurality of instruction element data sets (IEDS) each representing a particular instruction element (IE) of the instruction format (IF) and generated by one or more instruction element generating units (CO, ARG, SUB) of said unit (IFSET) for preparing an instruction data set;
**c)** a unit (IFCFG) containing a tree data structure (TRE) consisting of a plurality of instruction format nodes (N0; N0, N1, N2; H1, H1.1, H1.2, H1.3; INCL), each instruction format node (NO) indicating a particular combination of instruction elements (IE) constituting a particular instruction format (IF) and having associated with it a node selection criterion (OP, RE, VAL);
**d)** a unit (IFSEL) for searching said tree data structure (TRE) with the determined content data request properties (CDPP) and for selecting an instruction format node (IFNO) whose associated node selection condition ((OP, RE, VAL) matches said determined content data request properties (CDPP); and
**e)** said unit (IFSET) for preparing an instruction data set being adapted for preparing the instruction data set (IDS) to be sent to the client unit (CU) executing the instruction element generating units (CO, ARG, SUB) of the selected instruction format node (NO).

**25.** A data communication system (SYS) comprising one or more server units (SERV) according to one or more of claims 1-17 and one or more client units (CU).

**26.** A server unit (SERV) of a data processing system (DPS) in which one or more client units (CU) are provided by the server unit (SERV) with an instruction data set (IDS) in a particular instruction format (IF) in response to a content data request (CDRQ), comprising:
**c)** an instruction format configuration file (IFCFG) containing a tree data structure (TRE) consisting of a plurality of instruction format nodes (N0; N0, N1, N2; H1, H1.1, H1.2, H1.3; INCL), each instruction format node (NO) indicating a particular combination of instruction elements (IE) constituting a particular instruction format (IF) and having associated with it a node selection criterion (OP, RE, VAL); and
**d)** an instruction format selection unit (IFSEL) for searching said tree data structure (TRE) with content data request properties (CDPP) relating to a content data request (CDRQ) sent by the client unit (CU) and for selecting an instruction format node (IFNO) whose associated node selection condition ((OP, RE, VAL) matches said content data request properties (CDPP).

**27.** A method in a data processing system (DPS) for providing one or more client units (CU) by a server unit (SERV) with an instruction data set (IDS) in a particular instruction format (IF) in response to a content data request (CDRQ), comprising the following steps:
**c)** preparing a tree data structure (TRE) consisting of a plurality of instruction format nodes (N0; N0, N1, N2; H1, H1.1, H1.2, H1.3; INCL), each instruction format node (NO) indicating a particular combination of instruction elements (IE) constituting a particular instruction format (IF) and having associated with it a node selection criterion (OP, RE, VAL); and
**d)** searching said tree data structure (TRE) with content data request properties (CDPP) relating to a content data request (CDRQ) sent by the client unit (CU) and for selecting an instruction format node (IFNO) whose associated node selection condition ((OP, RE, VAL) matches said content data request properties (CDPP).

**28.** A server unit (SERV) of a data processing system (SYS) in which one or more client units (CU) are provided by the server unit (SERV) with an instruction data set (IDS) in a particular instruction format (IF), wherein the server unit (SERV) is adapted to make the instruction format (IF) of the instruction data set (IDS) flexibly dependent on the capabilities of the client unit (CU) and/or the properties of the content data (CD).

**29.** A server unit (SERV) of a data processing system (SYS) in which one or more client units (CU) are provided by the server unit (SERV) with an instruction data set (IDS) in a particular instruction format (IF), wherein the server unit (SERV) is adapted to make the generation and retrieval of the content data (CD) and its format (IF) flexibly dependent on properties of the client unit (CU) and/or the properties of resource units which provide said content data (CD).

**30.** A server unit (SERV) according to claim 29,
***wherein***
said server unit (SERV) comprises, for the flexible generation and retrieval of the content data (CD), a selection unit (IFSEL) adapted to select from a number of instruction format templates (ITEMP) a particular instruction format template (ITEMP) dependent on client properties and/or resource properties, wherein said template describes at what places in the instruction data set (IDS) particular instruction elements (IE) can be placed; and
one or more instruction element generating units (IEGU) adapted for inserting content data (CD) in the places indicated in the instruction format template (ITEMP);
wherein
the selection unit (IFSEL) also selects the one or more instruction element generating units (IEGU) in accordance with the client capabilities or resource capabilities, from several available instruction element generating units (IEGU).

**31.** A server unit (SERV) of a data processing system (SYS) in which one or more client units (CU) are provided by the server unit (SERV) with an instruction data set (IDS) in a particular instruction format (IF), wherein the server unit (SERV) comprises:
a selection unit (IFSEL) adapted to select from a number of instruction format templates (ITEMP) a particular instruction format template (ITEMP) dependent on client properties and/or resource properties, wherein said template describes at what places in the instruction data set (IDS) particular instruction elements (IE) can be placed; and
one or more instruction element generating units (IEGU) adapted for inserting content data (CD) in the places indicated in the instruction format template (ITEMP) ; wherein
the selection unit (IFSEL) also selects the one or more instruction element generating units (IEGU) in accordance with the client capabilities or resource capabilities, from several available instruction element generating units (IEGU).

**32.** A server unit (SERV) of a data processing system (SYS) in which one or more client units (CU) are provided by the server unit (SERV) with an instruction data set (IDS) in a particular instruction format (IF), wherein the server unit (SERV) is adapted to make the instruction format (IF) of the instruction data set (IDS) flexibly dependent on the properties of the client unit (CU) and/or the properties of the requested content data (CD) obtained by a content data request property provider unit (CDPM) which is adapted to analyse a content data request (RM) from the client unit (CU) to provide said one or more client unit related properties and content data related properties.

**33.** A server unit (SERV) of a data processing system (SYS) in which one or more client units (CU) are provided by the server unit (SERV) with an instruction data set (IDS) in a particular instruction format (IF), wherein the server unit (SERV) is adapted to make the instruction format (IF) of the instruction data set (IDS) flexibly dependent on client unit related properties stored in a first property memory (MEM1) and/or content data related properties stored in a second memory (MEM2).

**34.** A method in a data processing system (DPS) for providing one or more client units (CU) by a server unit (SERV) with an instruction data set (IDS) in a particular instruction format (IF) in response to a content data request (CDRQ) in which client unit (CU) related properties and/or content data related properties are provided in a property provision procedure (SS1) preceding a procedure (SS2) in which the instruction data set is provided to the client unit (CU) in an instruction data set provision procedure.

**35.** A server unit (SERV) of a data processing system (SYS) in which one or more client units (CU) are provided by the server unit (SERV) with an instruction data set (IDS), wherein the server unit (SERV) is adapted to make the provision of the instruction data set dependent on searching a tree structure in a configuration file (IFCFG) with some client unit (CU) related and/or content data related properties, wherein each node in the tree structure generates the instruction data set (IDS) in a different instruction format (IF).

**36.** A server unit (SERV) of a data processing system (SYS) in which one or more client units (CU) are provided by the server unit (SERV) with an instruction data set (IDS), wherein the server unit (SERV) is adapted to make the provision of the instruction data set dependent on searching a tree structure in an XML configuration file (IFCFG) with some client unit (CU) related and/or content data related properties, wherein each node in the tree structure generates the instruction data set (IDS) in a different instruction format (IF) with a screen template (ITEMP) generated by a template JSP (JAVA Server pages) or a servlet with a set of argument servlets and describing at what positions the arguments are to be inserted in the template (ITEMP).

**37.** A server unit (SERV) according to claim 36, wherein said tree structure is generated separately for each session between the client unit (CU) and the server unit (SERV).

**38.** A server unit (SERV) according to claim 36, wherein said tree structure is generated once and independently for each session between the client unit (CU) and the server unit (CU).

**39.** A server unit (SERV) according to claim 36, wherein said tree structure is generated dependent on client-related properties and/or content data properties.

**40.** A server unit (SERV) of a data processing system (SYS) in which one or more client units (CU) are provided by the server unit (SERV) with an instruction data set (IDS), wherein the server unit (SERV) is adapted to determine client unit related properties and content data related properties by analysing a content data request (RM) form the client unit (CU).
